# EUROPEAN PATENT APPLICATION

(11) **EP 4 170 548 A1**
(43) Date of publication of application: **26.04.2023**
(21) Application number: 21837893.3
(22) Date of filing: 08.07.2021
(51) Int. Cl.: G06N 3/04, G06N 3/08

(54) **METHOD AND DEVICE FOR CONSTRUCTING NEURAL NETWORK**

(30) Priority: 10.07.2020 CN 202010661477
(71) Applicant: Huawei Technologies Co., Ltd., Longgang Shenzhen, Guangdong 518129 (CN)
(72) Inventor: HONG, Weijun, Shanghai 200240 (CN); LI, Guilin, Shenzhen, Guangdong 518129 (CN); ZHANG, Weinan, Shanghai 200240 (CN); YU, Yong, Shanghai 200240 (CN); ZHANG, Xing, Shenzhen, Guangdong 518129 (CN); LI, Zhenguo, Shenzhen, Guangdong 518129 (CN)
(74) Representative: Gill Jennings & Every LLP
(86) International application number: PCT/CN2021/105091
(87) International publication number: WO 2022/007867

(57) **Abstract**

A neural network building method and apparatus are disclosed, and relate to the field of artificial intelligence. The method includes: initializing search space and a plurality of building blocks, where the search space includes a plurality of operators, and the building block is a network structure obtained by connecting a plurality of nodes by using the operator (1001); during training, in at least one training round, randomly discarding some operators (1002), and updating the plurality of building blocks by using operators that are not discarded (1003); and building a target neural network based on the plurality of updated building blocks (1004). In the method, some operators are randomly discarded. This breaks association between operators, and overcomes a co-adaptation problem during training, to obtain a target neural network with better performance.

## Description

This application claims priority to Chinese Patent Application No. 202010661477.X, filed with the China National Intellectual Property Administration on July 10, 2020 and entitled "NEURAL NETWORK BUILDING METHOD AND APPARATUS", which is incorporated herein by reference in its entirety.

### TECHNICAL FIELD

This application relates to the field of artificial intelligence, and more specifically, to a neural network building method and apparatus.

### BACKGROUND

With rapid development of artificial intelligence (AI) technologies, a neural network (for example, a deep neural network) has scored great achievements in processing and analyzing multimedia signals such as an image, a video, and voice. A neural network with excellent performance often has a delicate network architecture that requires a lot of effort to build by highly skilled and experienced human experts. To better build a neural network, a neural architecture search (NAS) method is proposed to build a neural network, and a neural architecture with excellent performance is obtained by automatically searching for a neural architecture.

Differentiable architecture search (DARTS) is a common neural architecture search method. Because DARTS is formalized as a second-order optimization problem, many researches show that DARTS is unstable and difficult to converge during searching, and poorer architectures are often found. In addition, second-order optimization has more computing overheads and lower data utilization than first-order optimization. Related technologies such as stochastic neural architecture search (SNAS), StacNAS, and another first-order optimization search method are used to alleviate instability of DARTS. In the conventional technology, compared with second-order optimization methods, a plurality of DARTS methods that use first-order optimization have a plurality of advantages, for example, easier implementation, faster convergence during optimization, and higher memory and data utilization. However, during actual application, when the first-order optimization method is directly applied to original search space of DARTS, performance of a found architecture is worse than that obtained by the second-order optimization method.

Convergence of first-order optimization is faster than that of second-order optimization, but performance of a found architecture is poor. A main reason is that all operators are simultaneously optimized during first-order optimization, and training rounds (quantities of rounds) required by different types of operators vary greatly. An operator that requires fewer training rounds has a pre-trained good expression capability, so that the operator that requires fewer training rounds is constantly preferred during training. Consequently, an operator that requires more training rounds is less expressed. Different expression capabilities between operators lead to a result that a found architecture is a neural network architecture with the fastest convergence speed, but not an optimal neural network architecture.

Therefore, how to balance a convergence speed and search quality of a neural network search method, to better obtain a neural network architecture that meets a requirement is a technical problem to be urgently resolved.

### SUMMARY

Embodiments of this application provide a neural network building method and apparatus, to better obtain a neural network architecture that meets a requirement.

According to a first aspect, a neural network building method is provided. The method includes: initializing search space and a plurality of building blocks, where the search space includes a plurality of operators, and the building block is a network structure obtained by connecting a plurality of nodes by using the operator; during training, in at least one training round, randomly discarding some of the plurality of operators, and updating the plurality of building blocks by using operators that are not discarded; and building a target neural network based on the plurality of updated building blocks.

In the technical solutions of this application, operators are randomly discarded, to achieve fairness between operators. This eliminates preference for some operators with a fast convergence speed in NAS, so that all operators can be expressed, to find a better neural network architecture.

In other words, for a co-adaptation problem and Matthew effect that exist between operators during searching, an embodiment of this application provides an improved solution for NAS based on first-order optimization, to utilize an advantage of first-order optimization, and break association between operators. Therefore, both operators with fewer parameters and operators with more parameters can be expressed. This can resolve poor performance, caused by the co-adaptation problem and the Matthew effect, of a neural network architecture built by using a neural network search method based on first-order optimization. However, it should be understood that the solutions in this embodiment of this application may also be used in another NAS method, and can improve any NAS scenario with a co-adaptation problem between operators.

Optionally, the target neural network may be built, for example, in a stacking manner, based on the plurality of building blocks updated in any training round. With increase in the training rounds, obtained updated building blocks are better, to build a target neural network with better performance.

With reference to the first aspect, in some implementations of the first aspect, the target neural network may be built based on the plurality of updated building blocks obtained in a last training round.

Optionally, when some operators are randomly discarded, a discard rate may be set for discarding.

Optionally, when some operators are randomly discarded, operators may be discarded by group.

With reference to the first aspect, in some implementations of the first aspect, the operators may be grouped by type into a plurality of operator groups. When operators are randomly discarded, each of the plurality of operator groups reserves at least one operator. The operators are grouped for random discarding, and it is ensured that at least one operator in each group is not discarded. This can make training more stable, and further improve searching effect.

Optionally, an intersection set of the operator types included in the plurality of operator groups may further be empty, that is, a same type of operator exists only in one operator group. Therefore, different types of operators can be reserved during each time of discarding.

With reference to the first aspect, in some implementations of the first aspect, different discard rates may further be set for operator groups. For example, when there are two operator groups, discard rates of the two operator groups may be different. When there are three or more operator groups, discard rates of at least two of the operator groups may be different. For example, discard rates of all operator groups may be different, or discard rates of only some operator groups may be different.

With reference to the first aspect, in some implementations of the first aspect, the operator groups may be grouped based on a quantity of parameters included in each type of operator.

With reference to the first aspect, in some implementations of the first aspect, the plurality of operator groups may include a first operator group and a second operator group. None of operators in the first operator group includes a parameter, for example, a zero operation, skip connection, 3x3 average pooling, and 3x3 maximum pooling. Each operator in the second operator group includes a parameter, for example, 3x3 separable convolution, 5x5 separable convolution, 3x3 dilated separable convolution, and 5x5 dilated separable convolution.

The grouping manner may be considered as a special case of grouping based on a quantity of operators. In other words, an operator that does not include a parameter is the first group, and an operator that includes a parameter is the second group. If a threshold is set for grouping, the threshold is equal to 0.

It should be noted that, in this embodiment of this application, some operators are randomly discarded, so that competition between operators is fair. However, for another discarding manner, a problem of unfair competition may be worse. For example, it is assumed that only one or more types of operators are discarded, and it is not "fair" for the discarded operators. Discarding some operators may reduce the convergence speed to some extent, which is equivalent to sacrificing a part of the convergence speed for a better searching result.

With reference to the first aspect, in some implementations of the first aspect, when the plurality of building block are updated, weight attenuation may be performed only on a parameter included in the operator that is not discarded. This can effectively avoid excessive regularization.

With reference to the first aspect, in some implementations of the first aspect, architecture parameters of the plurality of updated building blocks may further be adjusted based on a relationship between the discarded operator and the operator that is not discarded. This can further ensure training effect after the discarding operation is performed. In other words, it is expected that the architecture parameter of the discarded operator remains unchanged. However, in an actual updating process, the architecture parameter of the discarded operator may change due to impact of overall parameters. Therefore, an updated architecture parameter may be adjusted to the value before updating or a value as close as possible to the value before updating. For example, adjustment may be performed by introducing a new item.

Optionally, in this embodiment of this application, the operator may include at least one of the following: skip connection, average pooling, maximum pooling, separable convolution, dilated separable convolution, and a zero operation. Skip connection does not limit a quantity of nodes that are skipped. Both average pooling and maximum pooling may include pooling of any size, for example, 2x2, 3x3, 4x4, 5x5.... Separable convolution and dilated separable convolution may include pooling of any odd size: 3x3, 5x5, 7x7....

After the target neural network is obtained, the target neural network may further be trained based on training data, to obtain a neural network model that can execute a specific task, for example, an image classification model for image classification, or a target detection model for target detection.

With reference to the first aspect, in some implementations of the first aspect, an image classification training sample may further be obtained. The target neural network is trained based on the image classification training sample, to obtain an image classification model, and the image classification model is used to classify an image.

In other words, in an application scenario of image classification, image classification training samples may be first obtained, and then the target neural network is trained based on the samples, to obtain the image classification model. After the image classification model is obtained, an image may be classified. For example, a to-be-processed image is input to the image classification model, to obtain a corresponding classification result.

The image classification training sample may be an image with a category label. Optionally, an existing training set may be used, for example, a training set such as CIFAR-10, CIFAR-100, or ImageNet in this embodiment of this application.

With reference to the first aspect, in some implementations of the first aspect, a target detection training sample may further be obtained. The target neural network is trained based on the target detection training sample, to obtain a target detection model, and the target detection model is used to detect a target from a to-be-processed image.

In other words, in an application scenario of target detection, target detection training samples may be first obtained, and then the target neural network is trained based on the samples, to obtain the target detection model. After the target detection model is obtained, target detection may be performed on an image. For example, a to-be-processed image is input to the target detection model, to obtain a corresponding detection result. For example, a bounding box may be drawn around a target in an image. The target may be a person, an object, or the like.

Optionally, for a target detection task in a driving scenario, the target may include at least one of the following: a vehicle, a pedestrian, an obstacle, a road sign, and a traffic sign.

It should be noted that the target detection training sample may be a target image with a category label. For example, in images including cats in various forms, a cat in the image is a target, and "cat" is a target category. Optionally, an existing training set may also be used, for example, a training set such as CIFAR-10, CIFAR-100, or ImageNet in this embodiment of this application.

In image classification, an image with a category label may be output. Object detection is different from image classification, and an image with an object surrounded by a bounding box is output.

According to the neural network building method in this embodiment of this application, a neural network architecture with better performance can be obtained. Therefore, the neural network architecture can further be used to train a model of a specific task, to obtain a model of a specific task with higher accuracy. This can improve execution quality of the specific task. For example, accuracy of image classification and accuracy of target detection are improved.

According to a second aspect, a neural network building apparatus is provided. The apparatus includes a unit configured to perform the method in any implementation of the first aspect.

According to a third aspect, a neural network building apparatus is provided. The apparatus includes: a memory, configured to store a program; and a processor, configured to execute the program stored in the memory. When executing the program stored in the memory, the processor is configured to perform the method in any implementation of the first aspect.

According to a fourth aspect, a computer-readable medium is provided. The computer-readable medium stores program code used by a device for execution, and the program code is used by the device to perform the method in any implementation of the first aspect.

According to a fifth aspect, a computer program product including instructions is provided. When the computer program product is run on a computer, the computer is enabled to perform the method in any implementation of the first aspect.

According to a sixth aspect, a chip is provided. The chip includes a processor and a data interface, and the processor reads, through the data interface, instructions stored in a memory, to perform the method in any implementation of the first aspect.

Optionally, as an implementation, the chip may further include the memory. The memory stores the instructions, the processor is configured to execute the instructions stored in the memory, and when executing the instructions, the processor is configured to perform the method in any implementation of the first aspect.

### DESCRIPTION OF DRAWINGS

FIG. 1 is a schematic diagram of an artificial intelligence main framework;
FIG. 2 is a schematic diagram of a classification result of an image classification scenario;
FIG. 3 is a schematic diagram of a classification process of an image classification scenario;
FIG. 4 is a schematic diagram of a target detection result of a target detection scenario;
FIG. 5 is a schematic diagram of a system architecture according to an embodiment of this application;
FIG. 6 is a schematic diagram of a structure of a convolutional neural network;
FIG. 7 is a schematic diagram of a structure of a convolutional neural network;
FIG. 8 is a schematic diagram of a hardware structure of a chip according to an embodiment of this application;
FIG. 9 is a schematic diagram of an application scenario to which a solution according to an embodiment of this application is applicable;
FIG. 10 is a schematic flowchart of a neural network building method according to an embodiment of this application;
FIG. 11 is a schematic diagram of clustering results of feature mapping of operators at different training phases of a DARTS solution based on second-order optimization;
FIG. 12 is a schematic diagram of a building block according to an embodiment of this application;
FIG. 13 is a schematic flowchart of a neural network building method according to an embodiment of this application;
FIG. 14 is a schematic diagram of a searching result of a neural network architecture according to an embodiment of this application;
FIG. 15 is a schematic diagram of clustering results of feature mapping of operators at different training phases according to an embodiment of this application;
FIG. 16 is a schematic block diagram of a neural network building apparatus according to an embodiment of this application; and
FIG. 17 is a schematic diagram of a hardware structure of a neural network building apparatus according to an embodiment of this application.

### DESCRIPTION OF EMBODIMENTS

The following describes technical solutions of this application with reference to the accompanying drawings.

Embodiments of this application relate to a neural network. To better understand a method in embodiments of this application, the following first describes terms and concepts related to the neural network.

### (1) Neural network (NN)

The neural network may include a neuron. The neuron may be an operation unit that uses xₛ and an intercept of 1 as an input. An output of the operation unit may be shown as a formula (1): ${h}_{W , b} \left(x\right) = ƒ \left({W}^{T}x\right) = ƒ \left({\sum }_{s = 1}^{n} {W}_{s} {x}_{s} + b\right)$
s = 1, 2, ..., or n, n is a natural number greater than 1, Wₛ is a weight of xₛ, and b is a bias of the neuron. f is an activation function of the neuron, the activation function is used to perform non-linear transformation on a feature of the neural network, to convert an input signal in the neuron into an output signal. The output signal of the activation function may be used as an input of a next convolutional layer, and the activation function may be a sigmoid function. The neural network is a network constituted by connecting a plurality of single neurons together. To be specific, an output of a neuron may be an input to another neuron. An input of each neuron may be connected to a local receptive field of a previous layer to extract a feature of the local receptive field. The local receptive field may be a region including several neurons.

### (2) Deep neural network (DNN)

The deep neural network is also referred to as a multi-layer neural network, and may be understood as a neural network with a plurality of hidden layers. The DNN is divided based on locations of different layers, and a neural network in the DNN may be divided into three types: an input layer, a hidden layer, and an output layer. Usually, a first layer is the input layer, a last layer is the output layer, and a middle layer is the hidden layer. Layers are fully connected. To be specific, any neuron at an i^{th} layer is necessarily connected to any neuron at an (i+1)^{th} layer.

Although the DNN seems complex, the DNN is actually not complex in terms of work at each layer, and is simply represented as the following linear relationship expression: *̅y̅*̅=*α*(*W*□*̅x̅*̅+*̅b̅*̅), where *̅x̅*̅ is an input vector, *̅y̅*̅ is an output vector, *̅b̅*̅ is a bias vector, *W* is a weight matrix (which is also referred to as a coefficient), and *α*( ) is an activation function. At each layer, the output vector *̅y̅*̅ is obtained by performing such a simple operation on the input vector *̅x̅*̅. Because there are a plurality of layers in the DNN, there are also a plurality of coefficients *W* and a plurality of bias vectors *̅b̅*̅. Definitions of the parameters in the DNN are as follows: The coefficient *W* is used as an example. It is assumed that in a DNN with three layers, a linear coefficient from the fourth neuron at the second layer to the second neuron at the third layer is defined as ${W}_{24}^{3}$. The superscript 3 indicates a layer at which the coefficient *W* is located, and the subscript corresponds to an output third-layer index 2 and an input second-layer index 4.

In conclusion, a coefficient from a k^{th} neuron at an (L-1)^{th} layer to a j^{th} neuron at an L^{th} layer is defined as ${W}_{jk}^{L}$.

It should be noted that there is no parameter *W* at the input layer. In the deep neural network, more hidden layers make the network more capable of describing a complex case in the real world. Theoretically, a model with more parameters indicates higher complexity and a larger "capacity", and indicates that the model can be used to complete a more complex learning task. A process of training the deep neural network is a process of learning a weight matrix, and a final objective of training is to obtain weight matrices (weight matrices formed by vectors *W* at many layers) of all layers of a trained deep neural network.

### (3) Convolutional neural network (CNN)

The convolutional neural network is a deep neural network with a convolutional structure. The convolutional neural network includes a feature extractor including a convolution layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neurons arranged in a rectangular form. Neurons on a same feature plane share a weight, where the shared weight is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, a direct benefit brought by weight sharing is that connections between layers of the convolutional neural network are reduced and an overfitting risk is lowered.

### (4) Residual network (ResNet)

The residual network is a deep convolutional network first proposed in 2015. Compared with a conventional convolutional neural network, the residual network is easier to optimize and can enhance accuracy by increasing a larger depth. Essentially, the residual network resolves side effect (deterioration) brought by a depth increase. In this way, network performance can be improved by simply increasing a network depth. The residual network usually includes a plurality of submodules with a same structure. A residual network plus a number indicates a quantity of times of submodule repetition. For example, ResNet 50 indicates that there are 50 submodules in a residual network.

### (5) Recurrent neural network (RNN)

The recurrent neural network is used to process sequence data. In a conventional neural network model, from an input layer to a hidden layer and then to an output layer, the layers are fully connected, and neurons at each layer are not connected. Such a common neural network resolves many problems, but is still incapable of resolving many other problems. For example, if a word in a sentence is to be predicted, a previous word usually needs to be used, because adjacent words in the sentence are related. A reason why the RNN is referred to as the recurrent neural network is that a current output of a sequence is also related to a previous output of the sequence. A specific representation form is that the network memorizes previous information and applies the previous information to calculation of the current output. To be specific, neurons at the hidden layer are connected, and an input of the hidden layer not only includes an output of the input layer, but also includes an output of the hidden layer at a previous moment. Theoretically, the RNN can process sequence data of any length. Training for the RNN is the same as training for a conventional CNN or DNN.

Now that there is a convolutional neural network, why is the recurrent neural network required? In the convolutional neural network, there is a premise that elements are independent of each other, and an input and an output are also independent, such as a cat and a dog. However, many elements are interconnected in the real world. For example, stocks change over time. For another example, a person says: I like traveling, my favorite place is Yunnan, and I will go there in the future if there is a chance. Herein, people should know that the person will go to "Yunnan". A reason is that the people can deduce the answer based on content of the context. However, how can a machine do this? The RNN emerges. The RNN is intended to make the machine capable of memorizing like a human. Therefore, an output of the RNN needs to depend on current input information and historical memorized information.

### (6) Classifier

A plurality of neural network structures have a classifier at the end, to classify an object in an image. A classifier usually includes a fully connected layer and a softmax function (which may be referred to as a normalized exponential function), and can output probabilities of different classes based on an input.

### (7) Loss function

In a process of training a deep neural network, because it is expected that an output of the deep neural network is as close as possible to a value that is actually expected to be predicted, a predicted value of a current network and a target value that is actually expected may be compared, and then, a weight vector at each layer of the neural network is updated based on a difference between the two values (it is clear that there is usually an initialization process before the first update, to be specific, a parameter is preconfigured for each layer in the deep neural network). For example, if the predicted value of the network is higher, the weight vector is adjusted to obtain a lower predicted value. The weight vector is continuously adjusted until the deep neural network can predict the target value that is actually expected or a value that is very close to the target value that is actually expected. Therefore, "how to obtain, through comparison, the difference between the predicted value and the target value" needs to be predefined. This is a loss function or an objective function. The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

### (8) Back propagation (BP)

A neural network may use an error back propagation algorithm to correct a value of a parameter in an initial neural network model in a training process, so that a reconstruction error loss of the neural network model becomes smaller. Specifically, an input signal is transferred forward until an error loss occurs at an output, and the parameter in the initial neural network model is updated based on back propagation error loss information, to make the error loss converge. The back propagation algorithm is an error-loss-centered back propagation motion intended to obtain a parameter, such as a weight matrix, of an optimal neural network model.

In the conventional solutions, a NAS method based on second-order optimization is difficult to converge, has a complex structure, and has high computing and storage overheads. A NAS method based on first-order optimization has advantages of a fast convergence speed, high usage of memory and data, and a simple structure. However, performance of a neural network architecture obtained by using the NAS method based on first-order optimization is worse than performance of a neural network architecture obtained by using the NAS method based on second-order optimization. For the problems, embodiments of this application resolve poor performance of a neural network architecture obtained through first-order optimization. Through analysis and research, it is found that the problem of first-order optimization occurs mainly because all operators are simultaneously optimized during first-order optimization, and training rounds (quantities of rounds) required by different types of operators vary greatly. An operator that requires fewer training rounds is more expressed, but an operator that requires more training rounds is less expressed. Consequently, searching is fastest completed, but performance of a found neural network architecture is not optimal. In summary, a co-adaptation problem and Matthew effect exist between operators during searching.

The co-adaptation problem means that an operator with fewer parameters needs fewer training rounds for training, and information similar to that of an operator with more parameters can be expressed more quickly. Consequently, operators with more parameters can barely perform respective functions. Therefore, an operator with a slower convergence speed in a finally obtained independent model may never be expressed. Consequently, the entire system prefers operators that are easy to train. It may be understood that some operators, especially operators that include a few parameters, converge too quickly, and operators that include a plurality of parameters are "excluded" and "suppressed". Consequently, performance of a finally obtained architecture is not optimal.

The Matthew effect means that the system penalizes underfitting operators by lowering corresponding architecture parameters and feeding back smaller gradients to parameters, which makes co-adaptation worse. Because at the beginning of a supernetwork training phase, smaller architecture parameters are allocated to operators including more parameters, the underfilling operators need more time for training. It is equivalent to that the operators including more parameters need more training rounds. The operators including more parameters have a slower convergence speed, and are suppressed by the operators including a few parameters during training. However, the Matthew effect means that the better get better and the poor get poorer, and aggravates suppression. Consequently, the operators including more parameters are less expressed.

For the problems, an embodiment of this application provides an improved solution based on first-order optimization, to utilize an advantage of first-order optimization, and break association between operators. Therefore, both operators with fewer parameters and operators with more parameters can be expressed. This can resolve poor performance, caused by the co-adaptation problem and the Matthew effect, of a neural network architecture built by using a neural network search method based on first-order optimization. However, it should be understood that the solutions in this embodiment of this application may also be used in another NAS method, and can improve any NAS scenario with a co-adaptation problem between operators.

The solutions in this embodiment of this application may be applied to various NAS scenarios, for example, DARTS and SNAS. A specific found neural network architecture may be any type of neural network such as the CNN, DNN, and RNN, provided that appropriate search space needs to be set based on an actual requirement. This embodiment of this application is mainly described by using DARTS and the CNN as examples. However, it should be understood that the method in this embodiment of this application is applicable to searching of an architecture of any type of neural network, to any NAS based on first-order optimization, and to another NAS scenario with a co-adaptation problem.

A neural network obtained by using the solutions in this embodiment of this application can be applied to various image processing methods, for example, image searching, image classification, image recognition, and target detection. In addition, the neural network may further be applied to another artificial intelligence scenario, for example, intelligent translation and semantic extraction.

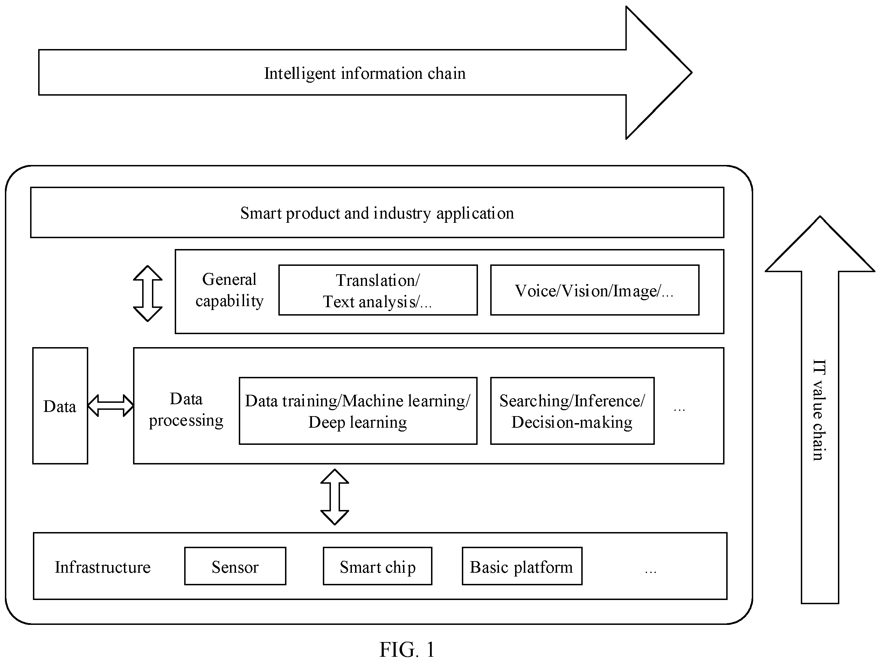

FIG. 1 is a schematic diagram of an artificial intelligence main framework. The main framework describes an overall working procedure of an artificial intelligence system, and is applicable to a requirement of a general artificial intelligence field.

The following describes in detail the foregoing artificial intelligence main framework from two dimensions: an "intelligent information chain" (horizontal axis) and an "information technology (IT) value chain" (vertical axis).

The "intelligent information chain" reflects a series of processes from obtaining data to processing the data. For example, the process may be a general process of intelligent information perception, intelligent information representation and formation, intelligent inference, intelligent decision-making, and intelligent execution and output. In these processes, the data undergoes a refinement process of "data-information-knowledge-intelligence".

The "IT value chain" reflects a value brought by artificial intelligence to the information technology industry from an underlying infrastructure and information (technology providing and processing implementation) of human intelligence to an industrial ecological process of a system.

### (1) Infrastructure

The infrastructure provides computing capability support for the artificial intelligence system, implements communication with the external world, and implements support by using a basic platform.

The infrastructure can communicate with the outside by using a sensor, and a calculation capability of the infrastructure can be provided by a smart chip.

The smart chip herein may be a hardware acceleration chip such as a central processing unit (CPU), a neural network processing unit (NPU), a graphics processing unit (GPU), an application-specific integrated circuit (ASIC), or a field programmable gate array (FPGA).

The basic platform of the infrastructure may include related platforms, for example, a distributed computing framework and a network, for assurance and support, including cloud storage and computing, an interconnection network, and the like.

For example, the infrastructure can communicate with the outside by using the sensor, to obtain data, and the data is provided to a smart chip in a distributed computing system provided by the basic platform for computing.

### (2) Data

Data at an upper layer of the infrastructure is used to indicate a data source in the field of artificial intelligence. The data relates to a graph, an image, voice, and text, further relates to Internet of things data of a conventional device, and includes service data of an existing system and perception data such as force, displacement, a liquid level, a temperature, and humidity.

### (3) Data processing

The foregoing data processing usually includes a processing manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inferring manner is simulated in a computer or an intelligent system, and machine thinking and problem resolving are performed by using formal information according to an inferring control policy. A typical function is searching and matching.

Decision-making is a process in which a decision is made after intelligent information is inferred, and usually provides functions such as classification, ranking, and prediction.

### (4) General capability

After data processing mentioned above is performed on data, some general capabilities may further be formed based on a data processing result, for example, an algorithm or a general system, such as translation, text analysis, computer vision processing, speech recognition, and image recognition.

### (5) Smart product and industry application

The smart product and the industry application are a product and an application of the artificial intelligence system in various fields, and are package of an overall solution of the artificial intelligence, so that decision-making for intelligent information is productized and an application is implemented. Application fields mainly include smart manufacturing, smart transportation, smart home, smart health care, smart security protection, autonomous driving, a safe city, a smart terminal, and the like.

Embodiments of this application may be applied to many fields of artificial intelligence, for example, fields such as smart manufacturing, smart transportation, smart home, smart health care, smart security protection, autonomous driving, and a safe city.

Specifically, embodiments of this application may be applied to fields in which a (deep) neural network needs to be used, for example, image classification, image retrieval, image semantic segmentation, image super-resolution processing, and natural language processing.

The following briefly describes two application scenarios: image classification and target detection.

### Application Scenario 1: image classification

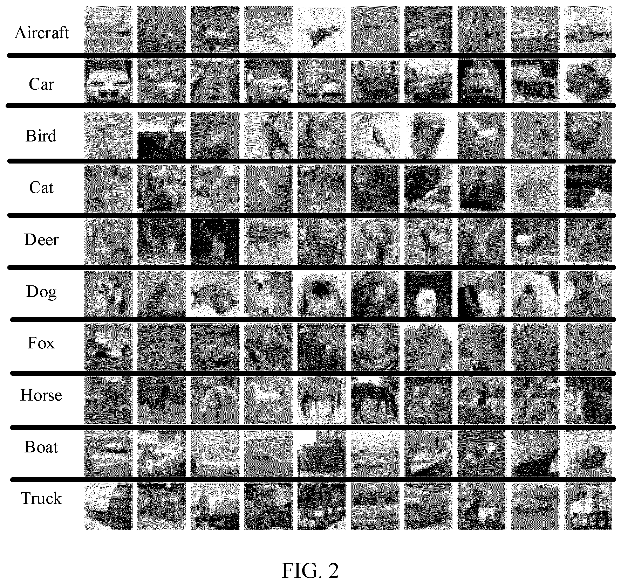

In the image classification scenario, input images may be classified into different categories, for example, an aircraft, a car, a bird, a cat, a deer, a dog, a fox, a horse, a boat, and a truck, as shown in FIG. 2. In other words, it is assumed that a neural network model obtained through training based on images in a training library can be used to classify the several categories. When some images are input to the trained neural network model, an input image may be classified into one of the several categories. In the image classification scenario, a neural network architecture obtained in a NAS process may be used as a structure of the neural network model. Alternatively, it may be understood that a neural network obtained through NAS is used as an initial model for building a neural network model used for an image classification task, and training is performed based on the initial model.

FIG. 2 is a schematic diagram of a classification result of an image classification scenario. The scenario shown in FIG. 2 includes a plurality of image categories, for example, an airplane, a car, a bird, and a cat. Images in each row belong to one category. When one or more images are input, the images may be classified into one or more categories by using a neural network model. However, it should be understood that FIG. 2 is merely an example of image classification. A quantity of classified categories and classified categories are not limited in this application.

For example, image classification may also be used for album image classification, so that a user can quickly search for an image based on a category. Specifically, when the user stores a large quantity of images on a terminal device (for example, a mobile phone) or a cloud disk, recognition of images in an album may help the user or a system perform classification management on the album, thereby improving user experience.

A neural network structure suitable for album classification can be obtained through searching by using a neural architecture search method in this embodiment of this application, and then a neural network is trained based on a training image in a training image library, to obtain an album classification neural network. Then, the album classification neural network may be used to classify images, to label images of different categories, so as to facilitate viewing and searching by the user. In addition, classification labels of the images may also be provided for an album management system for classification management. This saves management time of the user, improves album management efficiency, and improves user experience.

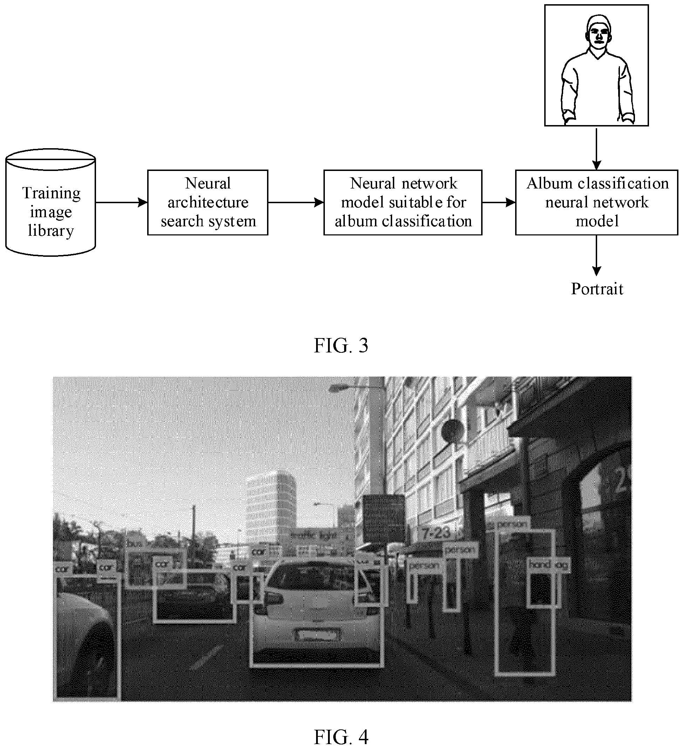

FIG. 3 is a schematic diagram of a classification process of an image classification scenario. As shown in FIG. 3, a neural network suitable for album classification may be built by using a neural network building system (corresponding to the neural architecture search method in this embodiment of this application). When the neural network is built, an operator of a building block in a search network may be selected by using the training image library, to obtain a building block, and then the neural network is built based on the building block. After the neural network suitable for album classification is obtained, the neural network may be trained based on the training image, to obtain an album classification neural network. Then, the album classification neural network may be used to classify a to-be-processed image. As shown in FIG. 3, the album classification neural network processes an input image, to obtain a category of the image that is a portrait.

### Application scenario 2: target detection

In the target detection scenario, a target, for example, a target person, a target object, or a target animal, in an image may be recognized. For example, FIG. 4 is a schematic diagram of a target detection result of a target detection scenario. In the target detection scenario shown in FIG. 4, a vehicle, a pedestrian, and the like in a road scenario, and relative locations of the vehicle and pedestrian may be recognized.

A neural network structure suitable for target detection can be obtained through searching by using a neural architecture search method in this embodiment of this application, and then a neural network is trained based on a training image in a training image library, to obtain a target detection neural network. Then, the target detection neural network can be used to recognize an image, to detect (recognize) a target from the image, draw a bounding box around the target, and show a category of the target in the image.

It is assumed that FIG. 4 is an image obtained by a vehicle in an autonomous driving scenario. A neural network building system can build a neural network based on a target detection task. During searching, some operators are randomly discarded, to avoid excessively fast convergence of some simple operators due to a co-adaptation problem. This can improve quality of the built neural network. After the neural network is obtained, the neural network may be trained based on sensor data, to obtain a sensor data processing network. Then, the sensor data processing network may be used to process the sensor data. As shown in FIG. 4, the sensor data processing network processes an input road image, to recognize a vehicle, a pedestrian, traffic lights, and the like (as shown in a rectangular box in FIG. 4) in the road image. Alternatively, the neural network may be trained, so that the neural network can further recognize a category of the vehicle, for example, a car and a bus in the figure.

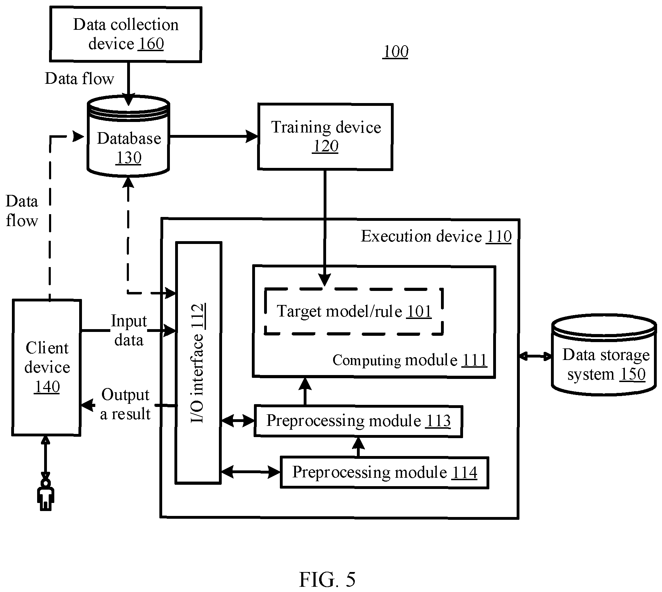

FIG. 5 is a schematic diagram of a system architecture according to an embodiment of this application. The system architecture may be used to train a neural network model, for example, an image classification model or a target detection model. As shown in FIG. 5, a data collection device 160 is configured to collect training data. For an image processing method (an example of application examples of a target neural network) in this embodiment of this application, the training data may include a training image and a classification result corresponding to the training image, and the result corresponding to the training image may be a result of manual pre-labeling.

After collecting the training data, the data collection device 160 stores the training data in a database 130, and a training device 120 obtains a target model/rule 101 through training based on the training data maintained in the database 130.

The following describes the target model/rule 101 obtained by the training device 120 based on the training data. The training device 120 processes an input original image, and compares an output image with the original image until a difference between the image output by the training device 120 and the original image is less than a specific threshold. In this way, training of the target model/rule 101 is completed.

The target model/rule 101 can be used to implement the image processing method (an example of application examples of a target neural network) in this embodiment of this application. The target model/rule 101 in this embodiment of this application may specifically be a neural network. It should be noted that, during actual application, the training data maintained in the database 130 is not necessarily all collected by the data collection device 160, and may be received from another device. It should further be noted that the training device 120 may not necessarily train the target model/rule 101 completely based on the training data maintained in the database 130, or may obtain training data from a cloud or another place to perform model training. The foregoing descriptions should not be construed as a limitation on embodiments of this application.

The target model/rule 101 obtained through training by the training device 120 may be applied to different systems or devices, for example, an execution device 110 shown in FIG. 5. The execution device 110 may be a terminal, for example, a mobile phone terminal, a tablet, a laptop computer, augmented reality (AR)/virtual reality (VR), or a vehicle-mounted terminal, or may be a server, a cloud, or the like. In FIG. 5, the execution device 110 configures an input/output (I/O) interface 112, configured to exchange data with an external device. A user may input data to the I/O interface 112 by using a client device 140, where the input data in this embodiment of this application may include a to-be-processed image input by the client device.

A preprocessing module 113 and a preprocessing module 114 are configured to perform preprocessing based on the input data (for example, the to-be-processed image) received by the I/O interface 112. In this embodiment of this application, the preprocessing module 113 and the preprocessing module 114 may not exist (or only one of the preprocessing module 113 and the preprocessing module 114 exists). A computing module 111 is directly configured to process the input data.

In a process in which the execution device 110 preprocesses the input data, or in a process in which the computing module 111 of the execution device 110 performs computing, the execution device 110 may invoke data, code, and the like in the data storage system 150 for corresponding processing, and may further store, in the data storage system 150, data, an instruction, and the like that are obtained through the corresponding processing.

Finally, the I/O interface 112 returns a processing result to the client device 140, and provides the processing result to the user.

It should be noted that the training device 120 may generate corresponding target models/rules 101 for different targets or different tasks based on different training data. The corresponding target models/rules 101 may be used to implement the foregoing targets or complete the foregoing tasks, to provide a required result for the user.

In a case shown in FIG. 5, the user may manually input data and the user may input the data on an interface provided by the I/O interface 112. In another case, the client device 140 may automatically send input data to the I/O interface 112. If it is required that the client device 140 needs to obtain authorization from the user to automatically send the input data, the user may set corresponding permission on the client device 140. The user may view, on the client device 140, a result output by the execution device 110. Specifically, the result may be presented in a form of displaying, a sound, an action, or the like. The client device 140 may alternatively be used as a data collection end, to collect, as new sample data, input data that is input to the I/O interface 112 and an output result that is output from the I/O interface 112 that are shown in the figure, and store the new sample data in the database 130. It is clear that the client device 140 may alternatively not perform collection. Instead, the I/O interface 112 directly stores, in the database 130 as new sample data, the input data input to the I/O interface 112 and the output result output from the I/O interface 112.

It should be noted that FIG. 5 is merely a schematic diagram of the system architecture according to an embodiment of this application. A location relationship between a device, a component, a module, and the like shown in the figure constitutes no limitation. For example, in FIG. 5, the data storage system 150 is an external memory relative to the execution device 110. In another case, the data storage system 150 may alternatively be disposed in the execution device 110.

As shown in FIG. 5, the target model/rule 101 is obtained through training by the training device 120. The target model/rule 101 may be a neural network built by using the neural architecture search method in this embodiment of this application. Specifically, the neural network built by using the neural architecture search method in this embodiment of this application may be a CNN, a deep convolutional neural network (DCNN), a recurrent neural network (RNN), or the like.

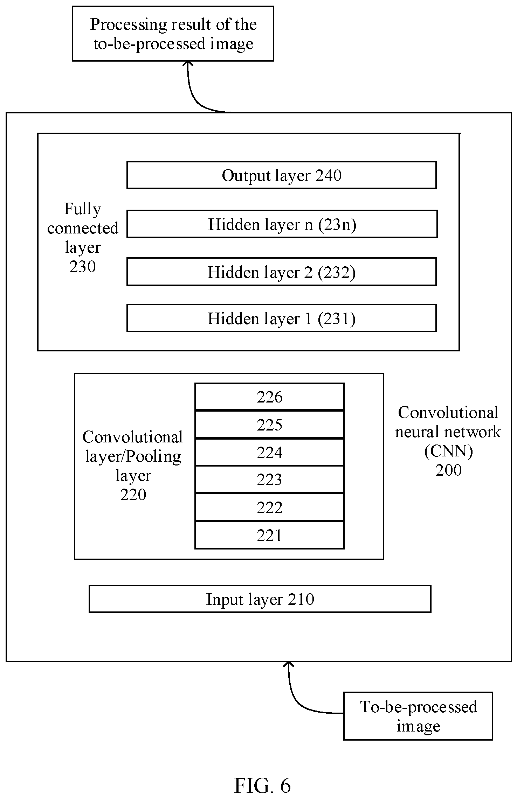

Because the CNN is a common neural network, the following mainly describes a structure of the CNN in detail with reference to FIG. 6. As described in the foregoing basic concepts, a convolutional neural network is a deep neural network with a convolutional structure, and is a deep learning architecture. In the deep learning architecture, multi-layer learning is performed at different abstract levels by using a machine learning algorithm. As a deep learning architecture, the CNN is a feed-forward artificial neural network. Neurons in the feed-forward artificial neural network may respond to an input image.

A structure of a neural network specifically used in the image processing method (an example of application examples of a target neural network) in this embodiment of this application may be shown in FIG. 6.

FIG. 6 is a schematic diagram of a structure of a convolutional neural network. In FIG. 6, a convolutional neural network (CNN) 200 may include an input layer 210, a convolutional layer/pooling layer 220 (the pooling layer is optional), and a fully connected layer 230. The input layer 210 may obtain a to-be-processed image, and send the obtained to-be-processed image to the convolutional layer/pooling layer 220 and the subsequent fully connected layer 230 for processing, to obtain a processing result of the image. The following describes in detail a structure of the layer in the CNN 200 in FIG. 6.

### Convolutional layer/Pooling layer 220:

### Convolutional layer:

As shown in FIG. 6, for example, the convolutional layer/pooling layer 220 may include layers 221 to 226. In an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layer 221 and the layer 222 are convolutional layers, the layer 223 is a pooling layer, the layer 224 and the layer 225 are convolutional layers, and the layer 226 is a pooling layer. To be specific, an output of a convolutional layer may be used as an input of a subsequent pooling layer, or may be used as an input of another convolutional layer to continue to perform a convolution operation.

The following uses the convolutional layer 221 as an example to describe an internal working principle of one convolutional layer.

The convolutional layer 221 may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix usually processes pixels at a granularity level of one pixel (or two pixels, depending on a value of a stride (stride)) in a horizontal direction on an input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows x columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and a further weight matrix is used to blur unnecessary noise in the image. The plurality of weight matrices have the same size (rows x columns), and convolutional feature maps extracted from the plurality of weight matrices with the same size have a same size. Then, the plurality of extracted convolutional feature maps with the same size are combined to form an output of the convolution operation.

Weight values in these weight matrices need to be obtained through a lot of training during actual application. Each weight matrix formed by using the weight values obtained through training may be used to extract information from an input image, to enable the convolutional neural network 200 to perform correct prediction.

When the convolutional neural network 200 has a plurality of convolutional layers, a relatively large quantity of general features are usually extracted at an initial convolutional layer (for example, 221). The general feature may also be referred to as a low-level feature. As the depth of the convolutional neural network 200 increases, a feature extracted at a subsequent convolutional layer (for example, 226) becomes more complex, for example, a high-level semantic feature. A feature with higher semantics is more applicable to a to-be-resolved problem.

### Pooling layer:

Because a quantity of training parameters usually needs to be reduced, a pooling layer usually needs to be periodically introduced after a convolutional layer. To be specific, for the layers 221 to 226 in the layer 220 shown in FIG. 6, one convolutional layer may be followed by one pooling layer, or a plurality of convolutional layers may be followed by one or more pooling layers. During image processing, the pooling layer is only used to reduce a space size of an image. The pooling layer may include an average pooling operator and/or a maximum pooling operator, to perform sampling on the input image to obtain an image with a small size. The average pooling operator may be used to calculate pixel values in the image in a specific range, to generate an average value. The average value is used as an average pooling result. The maximum pooling operator may be used to select a pixel with a maximum value in a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

### Fully connected layer 230:

After processing performed at the convolutional layer/pooling layer 220, the convolutional neural network 200 is not ready to output required output information. As described above, at the convolutional layer/pooling layer 220, only a feature is extracted, and parameters resulting from an input image are reduced. However, to generate final output information (required class information or other related information), the convolutional neural network 200 needs to use the fully connected layer 230 to generate an output of one required class or outputs of a group of required classes. Therefore, the fully connected layer 230 may include a plurality of hidden layers (231 and 232 to 23n shown in FIG. 6) and an output layer 240. Parameters included in the plurality of hidden layers may be obtained through pre-training based on related training data of a specific task type. For example, the task type may include image recognition, image classification, super-resolution image reconstruction, and the like.

At the fully connected layer 230, the plurality of hidden layers are followed by the output layer 240, namely, a last layer of the entire convolutional neural network 200. The output layer 240 has a loss function similar to a categorical cross entropy, and the loss function is specifically configured to calculate a prediction error. Once forward propagation (for example, propagation in a direction from 210 to 240 in FIG. 6) of the entire convolutional neural network 200 is completed, back propagation (for example, propagation in a direction from 240 to 210 in FIG. 6) is started to update a weight value and a deviation of each layer mentioned above, to reduce a loss of the convolutional neural network 200 and an error between a result output by the convolutional neural network 200 by using the output layer and an ideal result.

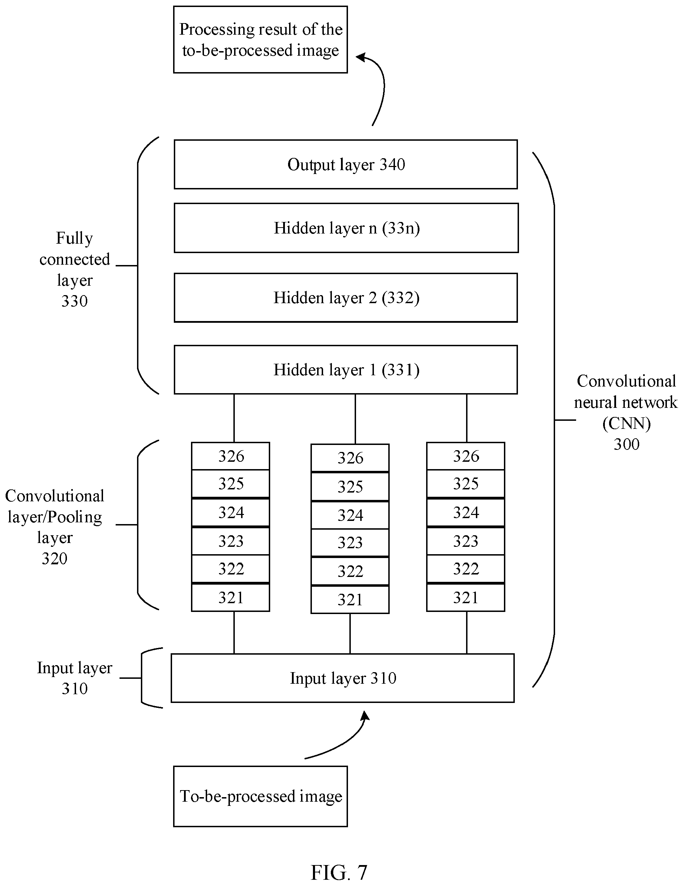

A structure of a neural network specifically used in the image processing method (an example of application examples of a target neural network) in this embodiment of this application may be shown in FIG. 7. In FIG. 7, a convolutional neural network (CNN) 200 may include an input layer 110, a convolutional layer/pooling layer 120 (the pooling layer is optional), and a neural network layer 130. In comparison with FIG. 6, in FIG. 7, at the convolutional layer/pooling layer 120, a plurality of convolutional layers/pooling layers are in parallel, and extracted features are input to the neural network layer 130 for processing.

It should be noted that the convolutional neural network shown in FIG. 6 and the convolutional neural network shown in FIG. 7 are merely two example convolutional neural networks used in the image processing method (an example of application examples of a target neural network) in this embodiment of this application. In a specific application, the convolutional neural network used in the image processing method in this embodiment of this application may alternatively exist in a form of another network model.

In addition, a structure of a convolutional neural network obtained by using the neural architecture search method in this embodiment of this application may be shown in the structure of the convolutional neural network in FIG. 6 and the structure of the convolutional neural network FIG. 7.

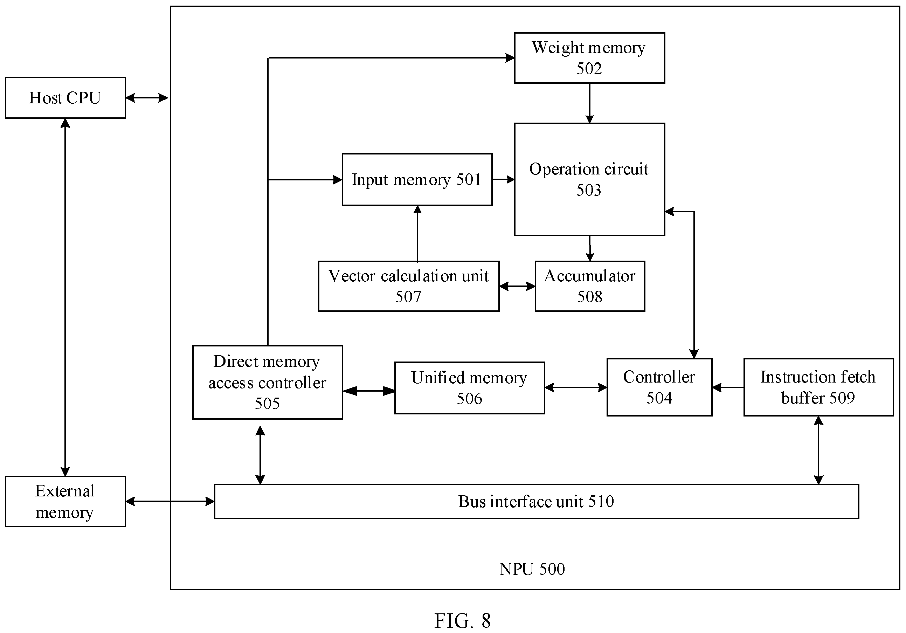

FIG. 8 is a schematic diagram of a hardware structure of a chip according to an embodiment of this application. The chip includes a neural network processing unit (an NPU 500 shown in the figure). The chip may be disposed in the execution device 110 shown in FIG. 2, to complete computing work of the computing module 111. The chip may alternatively be disposed in the training device 120 shown in FIG. 2, to complete training work of the training device 120 and output the target model/rule 101. Algorithms at all layers of the convolutional neural network shown in FIG. 3 may be implemented in the chip shown in FIG. 8.

The NPU 500 serves as a coprocessor, and may be disposed on a host central processing unit (host CPU). The host CPU assigns a task. A core part of the NPU is an operation circuit 50, and a controller 504 controls the operation circuit 503 to extract data in a memory (a weight memory or an input memory) and perform an operation.

In some implementations, the operation circuit 503 includes a plurality of processing engines (PE) inside. In some implementations, the operation circuit 503 is a two-dimensional systolic array. The operation circuit 503 may alternatively be a one-dimensional systolic array or another electronic circuit capable of performing mathematical operations such as multiplication and addition. In some implementations, the operation circuit 503 is a general-purpose matrix processor.

For example, it is assumed that there are an input matrix A, a weight matrix B, and an output matrix C. The operation circuit fetches, from a weight memory 502, data corresponding to the matrix B, and caches the data on each PE in the operation circuit. The operation circuit fetches data of the matrix A from an input memory 501, to perform a matrix operation on the matrix B, and stores an obtained partial result or an obtained final result of the matrix in an accumulator (accumulator) 508.

A vector calculation unit 507 may perform further processing such as vector multiplication, vector addition, an exponent operation, a logarithm operation, or value comparison on an output of the operation circuit. For example, the vector calculation unit 507 may be configured to perform network calculation, such as pooling, batch normalization, or local response normalization at a non-convolutional/non-FC layer in a neural network.

In some implementations, the vector calculation unit 507 can store a processed output vector in a unified memory 506. For example, the vector calculation unit 507 may apply a non-linear function to an output, for example, a vector of an accumulated value, of the operation circuit 503 to generate an activation value. In some implementations, the vector calculation unit 507 generates a normalized value, a combined value, or both a normalized value and a combined value. In some implementations, the processed output vector can be used as an activated input to the operation circuit 503, for example, the processed output vector can be used at a subsequent layer of the neural network.

The unified memory 506 is configured to store input data and output data.

For weight data, a direct memory access controller (DMAC) 505 directly transfers input data in an external memory to the input memory 501 and/or the unified memory 506, stores weight data in the external memory in the weight memory 502, and stores data in the unified memory 506 in the external memory.

A bus interface unit (BIU) 510 is configured to implement interaction between the host CPU, the DMAC, and an instruction fetch buffer 509 by using a bus.

The instruction fetch buffer 509 connected to the controller 504 is configured to store an instruction used by the controller 504.

The controller 504 is configured to invoke the instruction cached in the instruction fetch buffer 509, to control a working process of an operation accelerator.

Entry: Data herein may be described as description data according to an actual invention, for example, a detected vehicle speed, and a distance to an obstacle.

Usually, the unified memory 506, the input memory 501, the weight memory 502, and the instruction fetch buffer 509 each are an on-chip memory. The external memory is a memory outside the NPU. The external memory may be a double data rate synchronous dynamic random access memory (DDR SDRAM), a high bandwidth memory (HBM), or another readable and writable memory.

An operation at each layer in the convolutional neural network shown in FIG. 6 or the convolutional neural network FIG. 7 may be performed by the operation circuit 503 or the vector calculation unit 507. The CNN in FIG. 6 or the FIG. 7 may be built by using the neural architecture search method provided in embodiments of this application.

The execution device 110 in FIG. 5 can perform steps of the image processing method (an example of application examples of a target neural network) in this embodiment of this application. The CNN model shown in FIG. 6 and the CNN model shown in FIG. 7 and the chip shown in FIG. 8 may also be configured to perform the steps of the neural network architecture building method, or the image processing method, for example, image classification or target detection, in embodiments of this application.

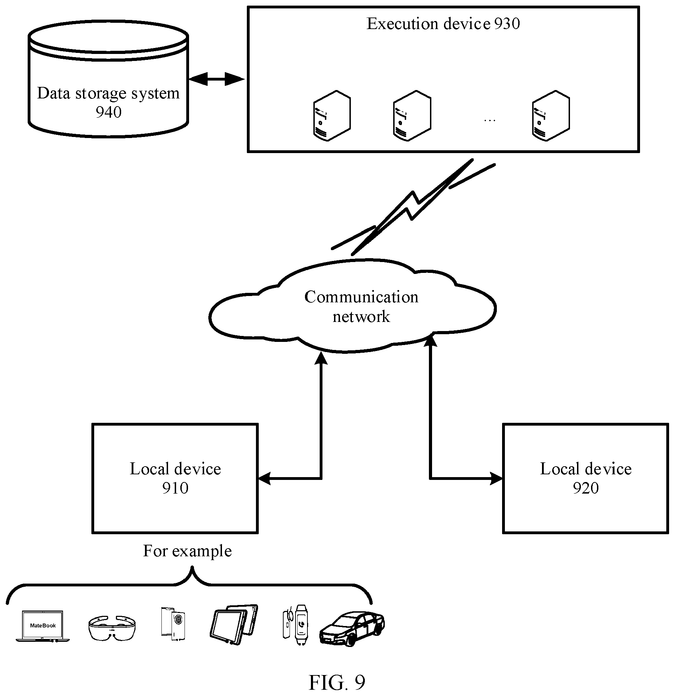

FIG. 9 is a schematic diagram of an application scenario to which a solution according to an embodiment of this application is applicable. The scenario includes a local device 910, a local device 920, an execution device 930, and a data storage system 940. The local device 910 and the local device 920 are connected to the execution device 930 by using a communication network.

The execution device 930 may be implemented by one or more servers. Optionally, the execution device 930 may cooperate with another computing device, for example, a device such as a data memory, a router, or a load balancer. The execution device 930 may be disposed on one physical site, or distributed on a plurality of physical sites. The execution device 930 may implement the neural network building method or the neural architecture search method in embodiments of this application based on data in the data storage system 940 or by invoking program code in the data storage system 940.

Specifically, the execution device 930 may perform the following processes: determining search space and a plurality of building blocks; stacking the plurality of building blocks, and building a target neural network based on the building blocks and a neural network architecture search method; when searching a network architecture in the search space, randomly discarding some operators, to avoid excessively fast convergence of some simple operators to suboptimal; and stacking the target neural network based on the generated building blocks.

It may be understood that, when the neural network is built, each possible neural network architecture is searched for in the search space according to a search policy. Then, a found neural network architecture is evaluated according to a performance evaluation policy, to select a neural network architecture with good performance. Then, a target neural network can be built based on the building blocks in the search space. In other words, the execution device 930 may build the target neural network through the foregoing process, and the target neural network may be used for image classification, image processing, or the like. It should be understood that the target neural network can also be used for another task category, for example, text processing, except that search space and building blocks are different.

A user may operate user equipment (for example, the local device 910 and the local device 920) to interact with the execution device 930. Each local device may be any computing device, such as a personal computer, a computer workstation, a smartphone, a tablet computer, an intelligent camera, a smart automobile, another type of cellular phone, a media consumption device, a wearable device, a set-top box, or a game console.

The local device of each user may interact with the execution device 930 through a communication network of any communication mechanism/communication standard. The communication network may be a wide area network, a local area network, a point-to-point connection, or any combination thereof.

In an implementation, the local device 910 and the local device 920 obtain a related parameter of the target neural network from the execution device 930, deploy the target neural network on the local device 910 and the local device 920, and perform image classification, image processing, or the like by using the target neural network.

In another implementation, the target neural network may be directly deployed on the execution device 930. The execution device 930 obtains a to-be-processed image from the local device 910 and the local device 920, and performs classification or another type of image processing on the to-be-processed image based on the target neural network.

The execution device 930 may also be referred to as a cloud device. In this case, the execution device 930 is usually deployed on a cloud. It should further be noted that, after the neural network is built, the neural network may further be used to train training data, to obtain a neural network model that can execute a specific task, and the neural network model is also applicable to the scenario shown in FIG. 9 in a process of training the neural network model. Data such as a to-be-processed image is transmitted between the local device and the execution device. The execution device may perform, by using the method in this embodiment of this application, a process of training a specific task model by using the built neural network.

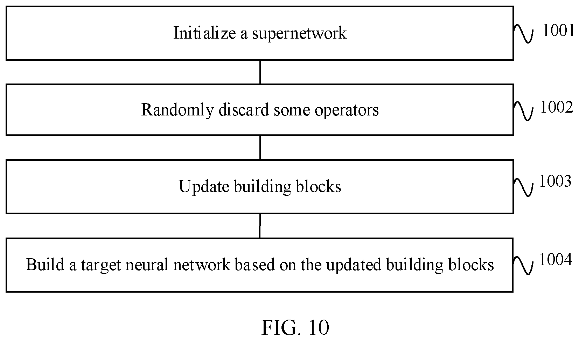

FIG. 10 is a schematic flowchart of a neural network building method according to an embodiment of this application. The following describes steps in FIG. 10. In this embodiment of this application, the neural network building method may be understood as a process of searching for a neural network structure by using a neural architecture search method, to build a target neural network.

Optionally, a neural network building method based on first-order optimization may be used, for example, DARTS or SNAS based on first-order optimization. In this embodiment of this application, DARTS based on first-order optimization is mainly used as an example for description. In DARTS based on second-order optimization, because a convergence speed is slow, if the solution in this embodiment of this application is used, negative impact may be caused.

1001: Initialize a supernetwork.

Optionally, the initializing a supernetwork may include initializing search space and/or initializing a plurality of building blocks.

Optionally, the search space may include at least one operator, and is determined based on an application requirement of a to-be-built target neural network. Specifically, the search space may be determined based on a type of data processed by the target neural network.

For example, when the target neural network is a neural network used to process image data, types and a quantity of operations included in the search space need to adapt to image data processing. When the target neural network is used to process voice data, the types and the quantity of operations included in the search space need to adapt to voice data processing.

The building block in this application is a network structure obtained by connecting a plurality of nodes by using a basic operation of a neural network. The building block is a basic module configured to build a neural network.

The building block may be understood as a building unit, or may be referred to as a cell. The plurality of building blocks may be stacked to form the entire search space. Each individual building block may be defined as a directed acyclic graph (DAG), and each directed acyclic graph usually includes N nodes {x₀, x₁, ..., x_{N-1}}. Each node may be considered as a layer of the entire neural network. A path connecting a node xᵢ and a node xⱼ may be referred to as an edge, E_{(i,j)} indicates an edge, both i and j indicate a number of a node in the N nodes, a value of the number corresponds to 0 to N-1, and E_{(i,j)} indicates the edge from the node xᵢ to the node xⱼ, that is, the edge is directional. Each edge is a set including all candidate operators. 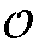 may indicate the set including all selectable operators, and the set complies with settings in original differentiable architecture searching, *o* may indicate each selectable operator, and $o ∈ O$.

It should be noted that a node in the building block is a neural network layer. For example, a layer of various neural networks such as a convolutional layer, a pooling layer, and a hidden layer is a node, and each neural network layer may include a plurality of neurons.

Optionally, the operator may include at least one of the following:
(1) skip connection;
(2) 3x3 average pooling (avg-pooling): average pooling with a pooling kernel size of 3x3 (avg_pool_3x3);
(3) 3x3 maximum pooling (max-pooling): maximum pooling with a pooling kernel size of 3x3 (max_pool_3x3);
(4) 3x3 separable convolution: separable convolution with a convolution kernel size of 3x3 (sep_conv_3x3);
(5) 5x5 separable convolution: separable convolution with a convolution kernel size of 5x5 (sep_conv_5x5);
(6) 3x3 dilated separable convolution (dilated separable convolution): dilated convolution with a convolution kernel size of 3x3 and a dilation rate of 2 (dil_conv_3x3);
(7) 5x5 dilated separable convolution: dilated convolution with a convolution kernel size of 5x5 and a dilation rate of 2 (dil_conv_5x5); and
(8) zero operation (zero): all neurons at corresponding locations are set to 0, the zero operation serves as a regulatory factor, and adjusts connection weights between different edges connected to a same node.

It should be understood that the eight operators are merely examples, and the search space may further include another operator, for example, 2x2 average pooling, 2x2 maximum pooling, or a 7x7 separable convolution operator. This is not limited. In addition, types of operators specifically included in the search space, a quantity of operators of each type, and the like are not limited.

In this embodiment of this application, a type of the operator may include at least one of the following: skip connection, average pooling, maximum pooling, separable convolution, dilated separable convolution, and a zero operation. Skip connection does not limit a quantity of nodes that are skipped. Both average pooling and maximum pooling may include pooling of any size, for example, 2x2, 3x3, 4x4, 5x5.... Separable convolution and dilated separable convolution may include pooling of any odd size: 3x3, 5x5, 7x7....

As described above, the conventional technology mainly uses DARTS based on second-order optimization, which is unstable and difficult to converge during searching, and a poor architecture is often found. However, although first-order optimization converges quickly and has a simple structure, effect is poor. It is found that main reasons for the poor effect are a co-adaptation problem and Matthew effect in first-order optimization.

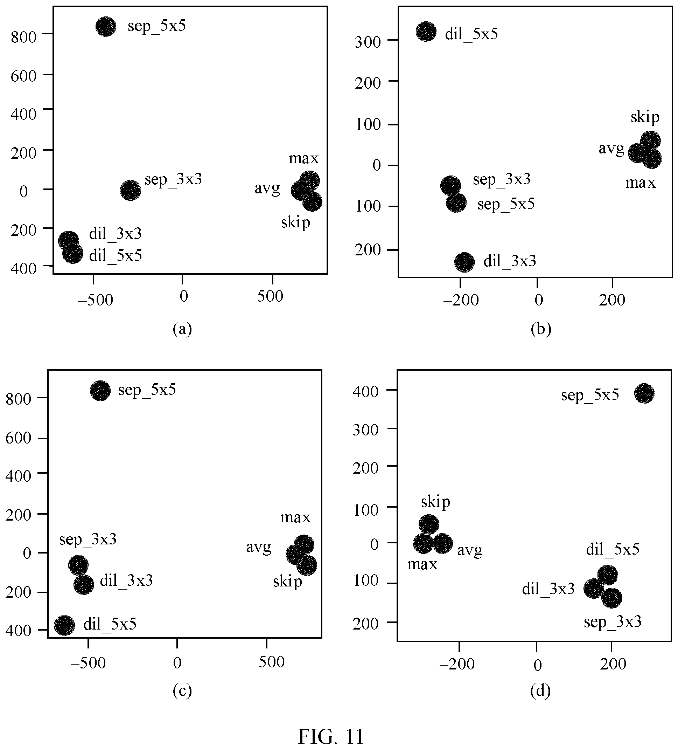

To further describe the foregoing viewpoints, the following provides descriptions with reference to FIG. 11. FIG. 11 is a schematic diagram of clustering results of feature mapping of operators at different training phases of a DARTS solution based on second-order optimization. In FIG. 11, (a) indicates a clustering result of operators of an initial building block of a dataset #1, (b) indicates a clustering result of operators of a final building block of the dataset #1, (c) indicates a clustering result of operators of an initial building block of a dataset #2, and (d) indicates a clustering result of operators of a final building block of the dataset #2. A quantity of samples in the dataset #1 is less than a quantity of samples in the dataset #2, the dataset #1 may be CIFAR-10 described below, and the dataset #2 may be CIFAR-100 described below. In FIG. 11, the following operators are included: sep_5x5 (indicating 5x5 separable convolution), sep_3x3 (indicating 3x3 separable convolution), dil_5x5 (indicating 5x5 dilated separable convolution), dil_3x3 (indicating 3x3 dilated separable convolution), max (indicating maximum pooling), avg (indicating average pooling), and skip (indicating skip connection).

Each figure in FIG. 11 is clustering of operators on an edge E₍₀, ₂₎, and E₍₀, ₂₎ is an edge connecting a first input node and a first internal node. One thousand data samples are randomly selected from two datasets, to generate the feature mapping, and the generated feature mapping is aggregated into three categories by using a K-means method, to better display similarity between the feature mapping. Finally, a principal component analysis method is used to reduce a dimension of the data to two-dimensional visual space, that is, the figures in FIG. 11 are generated. It can be seen from (a), (b), (c), and (d) in FIG. 11 that a co-adaptation problem and Matthew effect exist, and clustering of feature mapping of operators corresponding to convolution with a large kernel including more parameters deviates far from clustering of other convolution, for example, sep_5x5 shown in (a) in FIG. 11, dil_5x5 shown in (b) in FIG. 11, sep_5x5 shown in (c) in FIG. 11, and sep_5x5 shown in (d) in FIG. 11. It indicates that features expressed by the operators are different from features expressed by another similar convolution kernel. Consequently, architecture parameters obtained by using the operators are low. However, an architecture with more convolution with a large kernel in an independent model actually has a better performance, which violates a DARTS scoring system. In other words, convolution with a large kernel is often more helpful in building a neural network architecture with good performance, but cannot be expressed in a training phase.

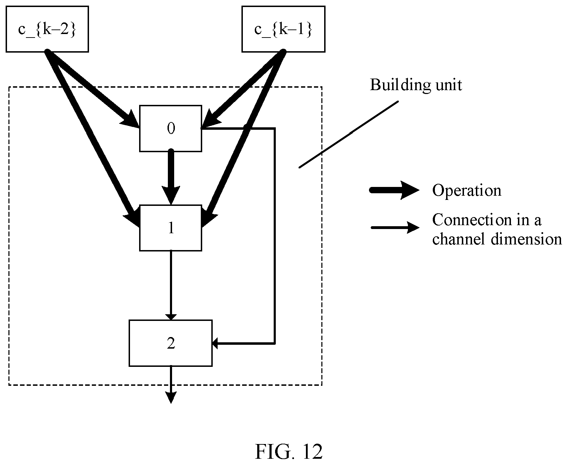

FIG. 12 is a schematic diagram of a building block according to an embodiment of this application. As shown in FIG. 12, a building block includes three nodes (a node 0, a node 1, and a node 2) in dashed-line box. The building block may receive data output by a node c_{k-2} and a node c_{k-1} (c_{k-2} and c_{k-1} may alternatively be feature maps that meet a requirement, for example, c_{k-2} and c_{k-1} may be feature maps obtained after convolutional processing is performed on an input image), and the node 0 and the node 1 respectively process the input data. Data output by the node 0 is further input to the node 1 for processing, data output by the node 0 and the node 1 is sent to the node 2 for processing, and the node 2 finally outputs data processed by the building block.

In addition, the node c_{k-2} and the node c_{k-1} may be considered as input nodes. The two nodes input to-be-processed data to the building block. Inside the building block, the node 0 and the node 1 are intermediate nodes, and the node 2 is an output node.

A thick arrow in FIG. 12 represents one or more operations, operations or operation results that are incorporated into a same intermediate node are added at the intermediate node. A thin arrow in FIG. 12 represents a feature map connection in a channel dimension, and a feature map output by the output node 2 is formed by sequentially connecting outputs of two intermediate nodes (the node 0 and the node 1) in the channel dimension of the feature map.

It should be understood that operations corresponding to the thick arrow and the thin arrow in FIG. 12 should be operations related to a specific case. Addition and the connection in the channel dimension herein are both designed for a convolutional neural network. In another case, an operation corresponding to nodes of the building block may alternatively be another type of operation or operation. The operations and the operations may be referred to as an operator.

The search space may include preset basic operations or a combination of basic operations in the convolutional neural network, where the basic operations or the combination of basic operations may be understood as a set (edge) of the operators. The search space may include at least one operator, for example, at least one of the eight operators described above. However, it should be understood that the search space may further include another operator other than the operators.

1002: Randomly discard some operators.

Optionally, some operators may be randomly discarded from each of the plurality of initialized building blocks before the building blocks are updated.

The operator may be randomly discarded, or may be discarded by setting a discard rate of the operator.

Optionally, the operators may be grouped, that is, the operators are grouped into a plurality of operator groups. When operators are randomly discarded, each of the plurality of operator groups reserves at least one operator.

Optionally, an intersection set of the operator types included in the plurality of operator groups may further be empty, that is, a same type of operator exists only in one operator group. Therefore, different types of operators can be reserved during each time of discarding.

Optionally, the operators may be grouped based on a quantity of parameters included in the operators, to obtain the plurality of operator groups.

Optionally, a threshold of a quantity of parameters may be set, and the operators are grouped based on a relationship between an actual quantity of parameters included in an operator and the threshold.

Optionally, the operators may alternatively be grouped based on whether a parameter is included. In other words, operators that include a parameter are grouped into one group, and operators that do not include a parameter are grouped into one group. The grouping manner may be considered as a special case of grouping based on a quantity of operators. In other words, an operator that does not include a parameter is a first group, and an operator that includes a parameter is a second group. If a threshold is set for grouping, the threshold is equal to 0.

Two operator groups may be defined: a first operator group and a second operator group. None of operators in the first operator group includes a parameter, for example, a zero operation, skip connection, 3x3 average pooling, and 3x3 maximum pooling. Each operator in the second operator group includes a parameter, for example, 3x3 separable convolution, 5x5 separable convolution, 3x3 dilated separable convolution, and 5x5 dilated separable convolution.

It should be noted that, in this embodiment of this application, some operators are randomly discarded, so that competition between operators is fair. However, for another discarding manner, a problem of unfair competition may be worse. For example, it is assumed that only one or more types of operators are discarded, and it is not "fair" for the discarded operators. Discarding some operators may reduce the convergence speed to some extent, which is equivalent to sacrificing a part of the convergence speed for a better searching result.

Optionally, step 1002 may be performed in at least one training round, that is, may be performed in all training rounds, or may be performed only in some training rounds. One training round may be understood as one update or one time of training of the building block. In other words, step 1002 may be performed before each update of the building block, or step 1002 may be performed only before at least one update of the building block.

1003: Update the building blocks.

Optionally, the building blocks may be updated by using a neural architecture search method based on first-order optimization. For example, DARTS based on first-order optimization may be used. It should be understood that, in this embodiment of this application, it is mainly expected that the operators are randomly discarded, so that competition between all operators is fair. The random discarding manner is especially applicable to resolving a problem that a quick convergence speed of a simple operator affects convergence of a complex operator in first-order optimization. However, it is also applicable to NAS that is not based on first-order optimization, for example, DARTS based on second-order optimization.

Optionally, a supernetwork parameter may be updated by using a remaining operator (an operator that is not discarded), and a supernetwork parameter corresponding to a discarded operator is not updated.

The supernetwork parameter includes a network parameter w and an architecture parameter *α*. The architecture parameter may be understood as a parameter for selecting an operator, and is equivalent to a parameter of an edge connecting layers. The network parameter may be understood as all parameters, other than the architecture parameter, related to neural network searching and neural network building.

In order to resolve overfitting, a technology referred to as regularization is often used to reduce complexity and a constraint weight of a model during training, to force the neural network to learn features that may be summarized. In this application, some operators are discarded during training. For a discarded operator, a weight attenuation operation may not be performed on the operator during weight attenuation, to avoid excessive regularization. In other words, weight attenuation can be performed only on an operator that is not discarded to avoid excessive regularization.

Optionally, some additional augmentation technologies may further be used, including automatic data augmentation (AutoAugment), mixing-up augmentation (mixup), an SE module (SE module), an auxiliary tower technology, a label smoothing technology, or the like.

Optionally, after the building blocks are updated, architecture parameters of the plurality of updated building blocks may further be updated based on a relationship between the discarded operator and the operator that is not discarded.

Optionally, a newly added item x may be introduced into the architecture parameter, and a value of the newly added item may be determined based on a ratio of a discarded operator to an operator that is not discarded.

Optionally, the newly added item x may meet the following formula: $\frac{{\sum }_{o ∈ {O}_{d}} exp \left({α}_{o}^{old}\right)}{{\sum }_{o ∈ {O}_{k}} exp \left({α}_{o}^{old}\right)} = \frac{{\sum }_{o ∈ {O}_{d}} exp \left({α}_{o}^{new}\right)}{{\sum }_{o ∈ {O}_{k}} exp \left({α}_{o}^{new}+x\right)}$

In the formula (2), a subscript (i, j) is omitted, *O_{d}* and *Oₖ* respectively indicate a set including discarded operators on the edge *E*_{(*i,j*)} and a set including operators that are not discarded, and ${α}_{o}^{old}$ and ${α}_{o}^{new}$ respectively indicate a value of the architecture parameter before updating and a value of the architecture parameter after updating. It should be noted that, for *o* ∈ *O_{d},* ${α}_{o}^{old} = {α}_{o}^{new}$. In other words, it is expected that the architecture parameter of the discarded operator remains unchanged. However, in an actual updating process, the architecture parameter of the discarded operator may change due to impact of overall parameters. Therefore, an updated architecture parameter may be adjusted, by setting x, to the value before updating or a value as close as possible to the value before updating.

In an actual operation, the formula (2) may be solved, to obtain a value of x, so as to adjust the updated architecture parameter ${α}_{o}^{new}$.

1004: Build a target neural network based on the updated building blocks.

Optionally, the target neural network may be built, for example, in a stacking manner, based on the plurality of building blocks updated in any training round. With increase in the training rounds, obtained updated building blocks are better, to build a target neural network with better performance.

Optionally, the target neural network may be built based on the plurality of updated building blocks obtained in a last training round. However, it should be understood that building blocks obtained in a penultimate training round, a third training round, or the like may alternatively be used.

In the method shown in FIG. 10, operators are randomly discarded, to achieve fairness between operators. This eliminates preference for some operators with a fast convergence speed in NAS, so that all operators can be expressed, to find a better neural network architecture. The operators are grouped for random discarding, and it is ensured that at least one operator in each group is not discarded. This can make training more stable, and further improve searching effect. When the building blocks are updated, weight attenuation is performed only on the parameter included in the operator that is not discarded. This can effectively avoid excessive regularization. The updated architecture parameter is adjusted based on the relationship between the discarded operator and the operator that is not discarded. This can further ensure training effect after the operators are discarded.

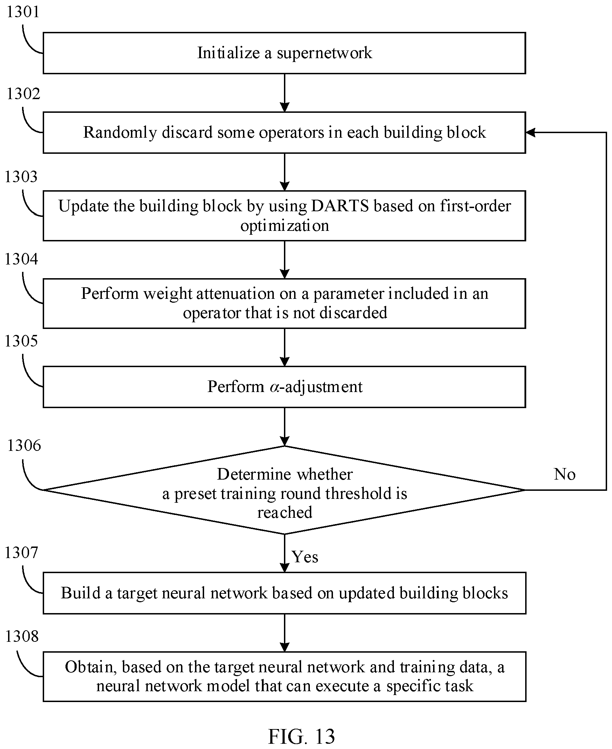

FIG. 13 is a schematic flowchart of a neural network building method according to an embodiment of this application. The following describes steps in FIG. 13.

1301: Obtain an initialized supernetwork.

Optionally, step 1301 may be performed by using the method in step 1001.

1302: Randomly discard some operators in each building block.

Optionally, step 1302 may be performed by using the method in step 1002.

1303: Update the building block by using DARTS based on first-order optimization.

Optionally, step 1303 may be performed by using the method in step 1003.

1304: Perform weight attenuation on a parameter included in an operator that is not discarded.

1305: Perform *α*-adjustment.

It should be noted that α-adjustment is a method for adjusting an architecture parameter of the supernetwork based on some relationships between the discarded operator and the operator that is not discarded. This may be implemented by using the related method described above.

1306: Determine whether a preset training round threshold is reached; and when it is determined that the preset training round threshold is reached, perform step 1307; or when it is determined that the preset training round threshold is not reached, perform step 1302.

In other words, in the method shown in FIG. 13, step 1306 is equivalent to performing an operation such as random discarding an operator in each training round.

1307: Build a target neural network based on updated building blocks.

Optionally, building blocks output in a last training round may be used. Alternatively, the building blocks may be understood as a plurality of updated building blocks obtained after all training rounds end.

1308: Obtain, based on the target neural network and training data, a neural network model that can execute a specific task.

It should be noted that step 1304 and step 1305 may not be performed, either step 1304 or step 1305 may be performed, or both step 1304 and step 1305 may be performed, and an execution sequence is not limited.

After the target neural network is obtained, for example, the target neural network is obtained by using the method shown in FIG. 10 or FIG. 13, the target neural network may further be trained based on the training data, to obtain the neural network model that can execute a specific task, for example, an image classification model for image classification, or a target detection model for target detection.

For example, in an application scenario of image classification, image classification training samples may be first obtained, and then the target neural network is trained based on the samples, to obtain the image classification model. After the image classification model is obtained, an image may be classified. For example, a to-be-processed image is input to the image classification model, to obtain a corresponding classification result.

The image classification training sample may be an image with a category label. Optionally, an existing training set may be used, for example, a training set such as CIFAR-10, CIFAR-100, or ImageNet in this embodiment of this application.

For another example, in an application scenario of target detection, target detection training samples may be first obtained, and then the target neural network is trained based on the samples, to obtain the target detection model. After the target detection model is obtained, target detection may be performed on an image. For example, a to-be-processed image is input to the target detection model, to obtain a corresponding detection result. For example, a bounding box may be drawn around a target in an image. The target may be a person, an object, or the like.

It should be noted that the target detection training sample may be a target image with a category label. For example, in images including cats in various forms, a cat in the image is a target, and "cat" is a target category. Optionally, an existing training set may also be used, for example, a training set such as CIFAR-10, CIFAR-100, or ImageNet in this embodiment of this application.

In image classification, an image with a category label may be output. Object detection is different from image classification, and an image with an object surrounded by a bounding box is output.

According to the neural network building method in this embodiment of this application, a neural network architecture with better performance can be obtained. Therefore, the neural network architecture can further be used to train a model of a specific task, to obtain a model of a specific task with higher accuracy. This can improve execution quality of the specific task.

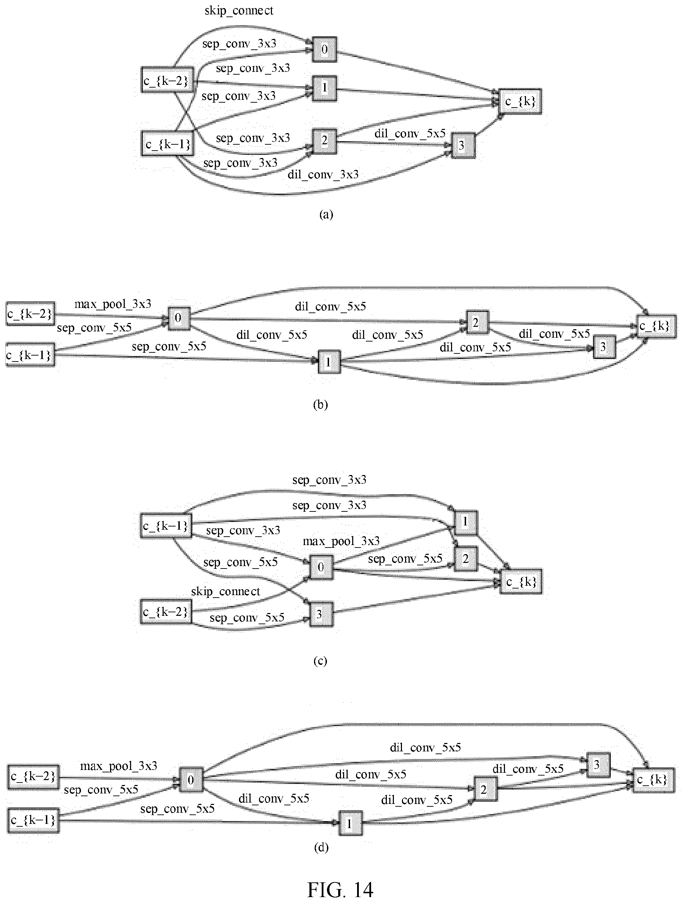

FIG. 14 is a schematic diagram of a searching result of a neural network architecture according to an embodiment of this application. FIG. 14 mainly shows searching results obtained by applying the method provided in embodiments of this application to three common image classification datasets. The three image datasets are CIFAR-10, CIFAR-100, and ImageNet. Both CIFAR-10 and CIFAR-100 are datasets commonly used for training machine learning and computer vision tasks, and are widely used in machine learning research. The CIFAR-10 dataset includes 50,000 training images and 10,000 test images, and a resolution of each image is 32x32. In CIFAR-10, all images, regardless of training image data or test image data, are equally classified into 10 (100) different categories. ImageNet is a larger image classification dataset that includes 1,300,000 images for training and other 50,000 images for testing. All images, regardless of training image data or test image data, are equally classified into 1000 different categories. In this embodiment of this application, ImageNet is used to verify a migration capability of the target neural network obtained by using the method in embodiments of this application. In this example, a size of an input image of ImageNet is fixed at 224x224, and a multiply-add operation is limited to 600 million.

The NAS method based on first-order optimization is used during network searching, and the image data in CIFAR-10 and CIFAR-100 are used as the image training samples when the target neural network is used to train the neural network model.

Initializing the supernetwork includes initializing search space and initializing building blocks. The initialized search space includes the eight operators. The initialized building blocks include 14 building blocks, the 14 building blocks are stacked to form the entire initialized search space, and a quantity of channels in each operator is set to 16. In an architecture searching phase, there are 76 training rounds, and a data amount of a single batch in each round is 96. In each round, some operators are randomly discarded, and building blocks are updated. A neural network architecture formed in a last training round is used as the target neural network (namely, used as an optimal network architecture). For the initialized supernetwork, the following initialization parameters are set: a learning rate is set to 0.0375, a gradient with momentum is used, the momentum is set to 0.9, weight attenuation is set to 0.0003, and a model weight w is optimized and updated by using a stochastic gradient descent method. In addition, a gradient of a network weight is clipped during each batch of training (that is, a threshold range of the gradient is set), to ensure that a norm of the gradient does not exceed 3 when the gradient is used for updating. In the initialized supernetwork, the architecture parameter *α* is optimized by an Adam optimizer, and the learning rate is set to 0.0003. A momentum method is also used for updating, a momentum tuple is set to (0.5, 0.999), and the weight attenuation is set to 0.001. During searching, a discard rate r is fixed at 0.00003 in different groups.

In a phase of training a model with a specific function by using the target neural network (for example, a phase of continuing training based on the found optimal architecture), the neural network model includes 20 stacked building blocks, and an initial quantity of channels is 36. In the phase, a quantity of training rounds is 600, and a data amount of a single batch in each training round is 192. The model parameter w of the network in the phase is also optimized by using the stochastic gradient descent. The learning rate is set to 0.05, the momentum is set to 0.9, and the weight attenuation is set to 0.0003. The norm of the gradient of the model parameter in each batch is clipped to less than 3, which is the same as that in the searching phase. The method is the same as DARTS in the conventional technology. Only one data augmentation method is used and is referred to as Cutout. An auxiliary tower technology is also used, and a weight of an auxiliary tower loss is set to 0.4 when a total loss is calculated.

To describe in detail performance of the target neural network in this embodiment of this application, an automatic data augmentation technology is additionally introduced, and a quantity of model training rounds is increased to 1200.

To fully prove the migration capability of the target neural network in this embodiment of this application, optimal network architectures (the target neural network) found in CIFAR-10 and CIFAR-100 are further separately used to build a network with 14 cells and 48 channels that is used for validation in the ImageNet dataset. The target neural network is trained for a total of 600 rounds, and 2048 training images are used in each round, to obtain an image classification model. Similarly, the stochastic gradient descent method is used to optimize a model weight of the image classification model, and an initial learning rate is set to 0.8 during optimization. A momentum method is used for updating, a momentum parameter is set to 0.9, and a weight attenuation coefficient is set to 0.00003. Similarly, a norm of a gradient of the model parameter is clipped, and is clipped to within 5.0 in each batch of training. Some additional augmentation technologies are also used, including automatic data augmentation, mixing-up augmentation, an SE module, an auxiliary tower technology with a loss coefficient of 0.4, and a label smoothing (label smoothing) technology with a coefficient *∈* of 0.1.

After the foregoing operations, search results shown in FIG. 14 are obtained. (a) in FIG. 14 represents an optimal architecture of a common building block obtained through searching in CIFAR-10. (b) in FIG. 14 represents an optimal architecture of a reduced building block obtained through searching in CIFAR-10. (c) in FIG. 14 represents an optimal architecture of a common building block obtained through searching in CIFAR-10. (d) in FIG. 14 represents an optimal architecture of a reduced building block obtained through searching in CIFAR-10.

In FIG. 14, an operator skip_connect indicates skip connection, an operator sep_conv_3x3 indicates 3x3 separable convolution, an operator dil_conv_3x3 indicates 3x3 dilated separable convolution, an operator dil_conv_5x5 indicates 5x5 dilated separable convolution, an operator max_pool_3x3 indicates 3x3 maximum pooling, an operator sep_conv_5x5 indicates 5x5 separable convolution, and a line without an operator indicates a zero operation.

It should be understood that the foregoing operation is merely an example, and parameter setting is not limited, for example, setting of the learning rate or the discard rate.

It can be seen from parts in FIG. 14 that, in a finally formed neural network architecture, a proportion of an operator including a parameter and an operator including more parameters is large, and such a neural network architecture has better performance. When the neural network architecture is used to train a neural network model with a specific function, it is easier to obtain a model with high accuracy. This can improve execution quality of a related task. For example, accuracy of an image classification model can be improved, and accuracy of image classification is further improved.

The following compares performance of a target neural network obtained through searching by using the neural network building method in embodiments of this application with performance of a neural network architecture obtained by using the NAS method in the conventional technology. Comparison results are shown in Table 1 to Table 3. Table 1 is comparison of performance of different architecture search methods in the CIFAR-10 dataset, Table 2 is comparison of performance of different architecture search methods in the CIFAR-100 dataset, and Table 3 is comparison of performance of different architecture search methods in the ImageNet dataset. The tables include various common NAS methods and the neural network building method in embodiments of this application. Because meanings of elements in the tables can be learned of by a person skilled in the art without creative efforts, the meanings of the elements are not enumerated herein.

**Table 1 Comparison of performance of different architecture search methods in a CIFAR-10 dataset**

| NAS method | Error rate (%) | Quantity of parameters (millions) | Execution duration (days) |
|---|---|---|---|
| DenseNet-BC¹ | 3.46 | 25.6 | - |
| NASNet-A | 2.65 | 3.3 | 1800 |
| AmoebaNet-B | 2.55±0.05 | 2.8 | 3150 |
| PNAS¹ | 3.41±0.09 | 3.2 | 225 |
| ENAS | 2.89 | 4.6 | 0.5 |
| NAONet | 3.18 | 10.6 | 200 |
| DARTS | 3.00 | 3.3 | 1.5 |
| SNAS | 2.85 | 2.8 | 1.5 |
| ProxylessNAS² | 2.08 | 5.7 | 4 |
| P-DARTS | 2.50 | 3.4 | 0.3 |
| DARTS+³ | 2.20 (2.37±0.13) | 4.3 | 0.6 |
| StacNAS | 2.33 (2.48±0.08) | 3.9 | 0.8 |
| ASAP | 2.49±0.04 | 2.5 | 0.2 |
| PC-DARTS | 2.57±0.07 | 3.6 | 0.1 |
| This application | 2.26 (2.58±0.14) | 4.1 | 0.6 |
| This application (augmented) | 1.88 | 4.1 | 0.6 |

Table 1 lists test results of various common architecture search methods, and a result of the architecture search method marked with a superscript 1 does not use the data augmentation method. The architecture search method marked with a superscript 2 uses different search space from search space in original DARTS. The architecture search method marked with a superscript 3 trains a model for validation for 2,000 rounds, and other methods (other than the architecture search method marked with a superscript 3) only train the model for 600 rounds. A result of the method (the penultimate row) in this application includes a mean value and a standard deviation of a test error rate. The data is obtained through training after all parameters are initialized from eight random operators, and a quantity of rounds or a quantity of channels used for training during model verification is not increased. The (augmented) method (the last row) in this application indicates a result after additional 1,200 rounds by using automatic data augmentation. It can be seen that the method in this application has few GPU days and a low error rate. It indicates that a target neural network with good performance can be quickly found by using the solution in this application.

**Table 2 Comparison of performance of different architecture search methods in a CIFAR-100 dataset**

| NAS method | Error rate (%) | Quantity of parameters (millions) | Execution duration (days) |
|---|---|---|---|
| DenseNet-BC¹ | 3.46 | 25.6 | - |
| NAONet² | 15.67 | 10.6 | 200 |
| DARTS² | 17.76 | 3.3 | 1.5 |
| P-DARTS | 15.92 | 3.6 | 0.3 |
| DARTS+³ | 14.87 (15.45±0.30) | 3.9 | 0.5 |
| StacNAS | 15.9 (16.11±0.20) | 4.3 | 0.8 |
| ASAP² | 15.6 | 2.5 | 0.2 |
| This application | 16.39 (16.95±0.41) | 4.4 | 0.7 |
| This application (augmented) | 14.10 | 4.4 | 0.7 |

Table 2 lists test results of various common architecture search methods, and a result of the architecture search method marked with a superscript 1 does not use the data augmentation method. The architecture search method marked with a superscript 2 is a searching result in the CIFAR-100 dataset. The architecture search method marked with a superscript 3 trains a model for validation for 2,000 rounds, and other methods (other than the architecture search method marked with a superscript 3) only train the model for 600 rounds. A result of the method (the penultimate row) in this application includes a mean value and a standard deviation of a test error rate. The data is obtained through training after all parameters are initialized from eight random operators, and a quantity of rounds or a quantity of channels used for training during model verification is not increased. The (augmented) method (the last row) in this application indicates a result after additional 1,200 rounds by using automatic data augmentation. It can be seen from Table 2 that the method in this application also has few GPU days and a low error rate. It indicates that a target neural network with good performance can be quickly found by using the solution in this application, and has good performance on different training sets.

**Table 3 Comparison of performance of different architecture search methods in an ImageNet dataset**

| NAS method | Error rate (%) T-1/T-5 | Quantity of parameters (millions) | Execution duration (days) |
|---|---|---|---|
| NASNet-A | 26.0/8.4 | 5.3 | 1800 |
| AmoebaNet-C | 24.3/7.6 | 6.4 | 3150 |
| PNAS | 25.8/8.1 | 5.1 | 588 |
| MnasNet-92 | 25.2/8.0 | 4.4 | - |
| EfficientNet-BO | 23.7/6.8 | 5.3 | - |
| DARTS | 26.7/8.7 | 4.7 | 4.0 |
| SNAS | 27.3/9.2 | 4.3 | 1.5 |
| ProxylessNAS^{1,2} | 24.9/7.5 | 7.1 | 8.3 |
| P-DARTS (C10) | 24.4/7.4 | 4.9 | 0.3 |
| ASAP | 26.7/- | - | 0.2 |
| XNAS | 24.0/- | 5.2 | 0.3 |
| PC-DARTS¹ | 24.2/7.3 | 5.3 | 3.8 |
| ScarletNAS^{1, 2} | 23.1/6.6 | 6.7 | 10 |
| DARTS+¹ | 23.9/7.4 | 5.1 | 6.8 |
| StacNAS¹ | 24.3/6.4 | 5.7 | 20 |
| Single-PathNAS^{1,2} | 25.0/7.8 | - | 0.16 |
| This application-CIFAR-10 | 23.4/6.7 | 5.7 | 0.6 |
| This application-CIFAR-100 | 23.5/6.8 | 6.1 | 0.7 |

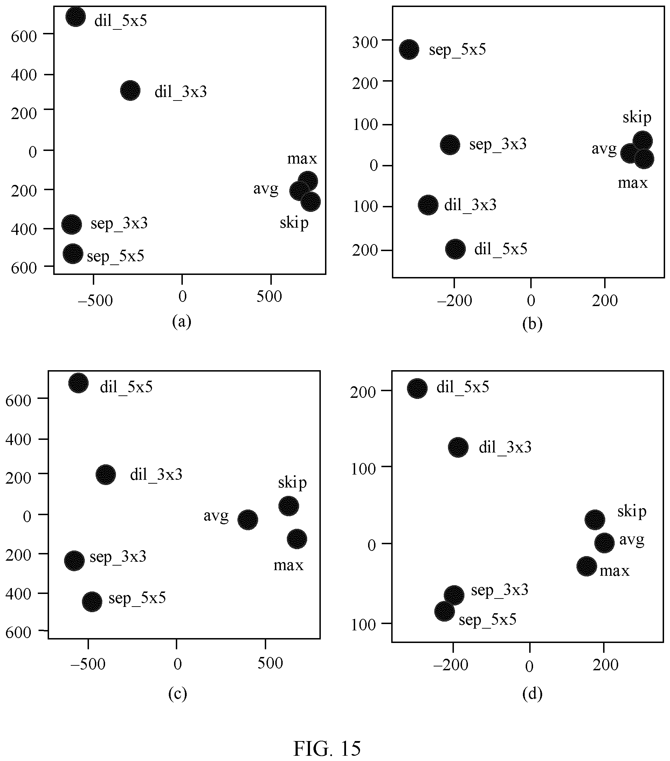

In Table 3, the neural network architecture used by the NAS method marked with a superscript 1 is obtained by directly searching in ImageNet, and the neural network architecture used by the NAS method marked with a superscript 2 is different from a neural network architecture used by original DARTS. The penultimate row (this application-CIFAR-10) is a result obtained after the target neural network obtained in the CIFAR-10 dataset by using the method in this application is migrated to the ImageNet dataset. The last row (this application-CIFAR-100) is a result obtained after the target neural network obtained in the CIFAR-100 dataset by using the method in this application is migrated to the ImageNet dataset. It can be seen from the result in Table 3 that, by using the neural network architecture according to the method in this application, both the target neural network obtained in CIFAR-10 and the target neural network obtained in CIFAR-100 still have good performance, few GPU days, and a low error rate when being migrated to another dataset. It indicates that the target neural network obtained by using the solution of this application has a good migration capability. In other words, the target neural network still has good performance when being migrated to another training set, and the migration capability is also one of performance indicators for evaluating a neural network architecture obtained through searching by using the NAS method. FIG. 15 is a schematic diagram of clustering results of feature mapping of operators at different training phases according to an embodiment of this application. Meanings of elements in FIG. 15 are consistent with meanings of corresponding elements in FIG. 11. In FIG. 15, (a) indicates a clustering result of operators of an initial building block of a dataset #1, (b) indicates a clustering result of operators of a final building block of the dataset #1, (c) indicates a clustering result of operators of an initial building block of a dataset #2, and (d) indicates a clustering result of operators of a final building block of the dataset #2. A quantity of samples in the dataset #1 is less than a quantity of samples in the dataset #2, the dataset #1 may be CIFAR-10 described above, and the dataset #2 may be CIFAR-100 described above. The obtaining method in FIG. 15 is the same as the method in FIG. 11.

Figures in FIG. 15 are compared with the figures in FIG. 11. It can be seen that, when the method in this application is used, compared with another similar operator, an operator, for example, sep_3x3, sep_5x5, and dil_5x5, with a slow convergence speed that includes a parameter does not have a large offset. For example, sep_5x5 in (a) in FIG. 11 has a large offset. However, operators including a parameter in (a) in FIG. 15 are evenly distributed, and operators of a same type are close to each other. In other words, by using the solution in embodiments of this application, a co-adaptation problem between operators can be effectively resolved. Therefore, all operators can be fairly expressed, and in particular, a complex operator that includes a parameter or includes a large quantity of parameters can be expressed.

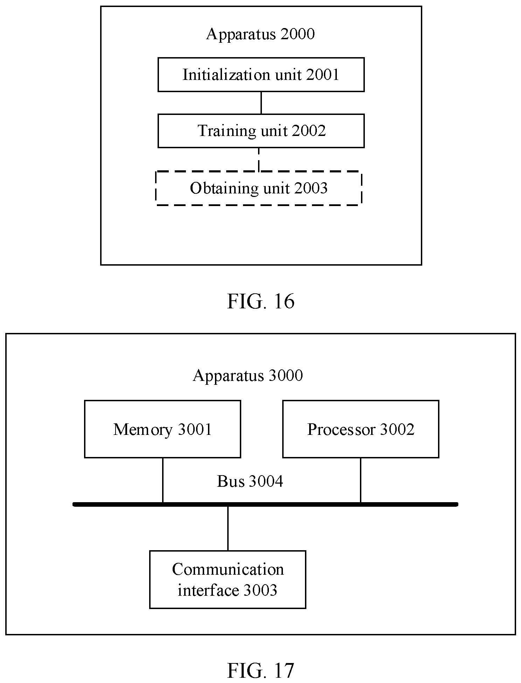

The following first describes a neural network building apparatus according to an embodiment of this application with reference to FIG. 16. The neural network building apparatus shown in FIG. 16 may be configured to perform steps of the neural network building method in embodiments of this application. The neural network building apparatus may be an apparatus, for example, a computer or a server, that has a computing capability to build a neural network.

FIG. 16 is a schematic block diagram of a neural network building apparatus according to an embodiment of this application. An apparatus 2000 shown in FIG. 16 includes an initialization unit 2001 and a training unit 2002.

The apparatus 2000 may be configured to perform steps of the neural network building method in embodiments of this application. For example, the initialization unit 2001 may be configured to perform step 1001 of the method shown in FIG. 10, and the training unit 2002 may be configured to perform step 1002 to step 1004 of the method shown in FIG. 10. For another example, the initialization unit 2001 may be configured to perform step 1301 of the method shown in FIG. 13, and the training unit 2002 may be configured to perform step 1302 to step 1308 of the method shown in FIG. 13.

Optionally, the initialization unit 2001 may determine an initialized supernetwork (initialized search space and/or initialized building blocks) based on a target requirement (an actual application requirement of a target neural network), or read an initialized supernetwork from a storage apparatus.

Optionally, the apparatus 2000 may further be configured to perform training by using a built target neural network, to obtain a neural network model with a specific function, or perform training by using a built target neural network, to obtain a neural network model that can perform a specific task, for example, the image classification model or the target detection model described above. The neural network model may alternatively be a model for another specific task.

Optionally, the apparatus 2000 may further include an obtaining unit 2003. The obtaining unit 2003 may be used to obtain training sample data, and the target neural network may be trained by using the training unit 2002, to obtain a neural network model.

In the apparatus 2000 shown in FIG. 16, an initialized supernetwork may alternatively be obtained by using the obtaining unit 2003. The network obtaining unit 2003 may be equivalent to a communication interface 3003 in an apparatus 3000 shown in FIG. 17, and the initialized supernetwork may be obtained through the communication interface 3003. Alternatively, the obtaining unit 2003 may be equivalent to a processor 3002 in an apparatus 3000 shown in FIG. 17, and the initialized supernetwork may be obtained by using the processor 3002 from a memory 3001.

In addition, the training unit 2002 in the apparatus 2000 shown in FIG. 16 may be equivalent to the processor 3002 in the apparatus 3000 shown in FIG. 17.

FIG. 17 is a schematic diagram of a hardware structure of a neural network building apparatus according to an embodiment of this application. As shown in FIG. 17, an apparatus 3000 includes a memory 3001, a processor 3002, a communication interface 3003, and a bus 3004. The memory 3001, the processor 3002, and the communication interface 3003 are communicatively connected to each other by using the bus 3004.

The memory 3001 may be a read-only memory (ROM), a static storage device, a dynamic storage device, or a random access memory (RAM). The memory 3001 may store a program. When the program stored in the memory 3001 is executed by the processor 3002, the processor 3002 and the communication interface 3003 are configured to perform steps of the neural network building method in embodiments of this application.

The processor 3002 may be a general-purpose CPU, a microprocessor, an ASIC, a GPU, or one or more integrated circuits, and is configured to execute a related program, to implement a function that needs to be executed by a unit in the neural network building apparatus in this embodiment of this application, or perform steps of the neural network building method in embodiments of this application.

The processor 3002 may alternatively be an integrated circuit chip and has a signal processing capability. In an implementation process, the steps of the neural network building method in embodiments of this application may be completed by using a hardware integrated logic circuit or an instruction in a form of software in the processor 3002.

Alternatively, the processor 3002 may be a general-purpose processor, a digital signal processor (DSP), an ASIC, an FPGA or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the neural network building method disclosed with reference to embodiments of this application may be directly executed and accomplished by using a hardware decoding processor, or may be executed and accomplished by using a combination of hardware and software modules in the decoding processor. The software module may be located in a mature storage medium in the field, such as a random access memory, a flash memory, a read-only memory, a programmable read-only memory, an electrically erasable programmable memory, or a register. The storage medium is located in the memory 3001. The processor 3002 reads information in the memory 3001, and completes, in combination with hardware of the processor 3002, a function that needs to be executed by a unit included in the neural network building apparatus in this embodiment of this application, or performs the steps of the neural network building method in embodiments of this application.

The communication interface 3003 uses a transceiver apparatus, for example but not for limitation, a transceiver, to implement communication between the apparatus 3000 and another device or a communication network. For example, a control parameter corresponding to an inference result may be sent through the communication interface 3003.

The bus 3004 may include a path for transmitting information between the components (for example, the memory 3001, the processor 3002, and the communication interface 3003) of the apparatus 3000.

It should be noted that, although only the memory, the processor, and the communication interface are shown in the apparatus 3000, in a specific implementation process, a person skilled in the art should understand that the apparatus 3000 may further include another component necessary for normal running. In addition, based on a specific requirement, a person skilled in the art should understand that the apparatus 3000 may further include a hardware component for implementing another additional function. In addition, a person skilled in the art should understand that the apparatus 3000 may include only components necessary for implementing embodiments of this application, but not necessarily include all the components shown in FIG. 17.

A specific structure of an execution body of a method provided in embodiments of this application is not specifically limited in embodiments of this application, provided that a program that records code for the method provided in embodiments of this application can be run to perform communication according to the method provided in the embodiments of this application. For example, the method provided in embodiments of this application may be performed by a terminal device, a network device, or a function module that is in a terminal device or a network device and that can invoke and execute the program.

Aspects or features of this application may be implemented as a method, an apparatus, or a product that uses standard programming and/or engineering technologies. The term "product" used in this specification may cover a computer program that can be accessed from any computer-readable component, carrier or medium. For example, the computer-readable medium may include but is not limited to a magnetic storage component (for example, a hard disk, a floppy disk, or a magnetic tape), an optical disc (for example, a compact disc (CD), or a digital versatile disc (DVD)), a smart card, and a flash memory component (for example, an erasable programmable read-only memory (EPROM), a card, a stick, or a key drive).

Various storage media described in this specification may indicate one or more devices and/or other machine-readable media that are configured to store information. The term "machine-readable media" may include but is not limited to a radio channel, and various other media that can store, include, and/or carry instructions and/or data.

It should be noted that when the processor is a general-purpose processor, a DSP, an ASIC, an FPGA or another programmable logic device, a discrete gate, a transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, with reference to the examples described in embodiments disclosed in this specification, units and steps may be implemented by electronic hardware or a combination of computer software and electronic hardware. Whether the functions are executed by hardware or software depends on particular applications and design constraints of the technical solutions. A person skilled in the art may use different methods to implement the described functions for each particular application, but it should not be considered that the implementation goes beyond the protection scope of this application.

A person skilled in the art may clearly understand that, for the purpose of convenient and brief description, for a detailed working process of the foregoing apparatus and unit, refer to a corresponding process in the method embodiments. Details are not described herein again.

In the several embodiments provided in this application, it should be understood that the disclosed apparatus and method may be implemented in another manner. For example, the described apparatus embodiment is used as an example. For example, the unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve objectives of the solutions of the embodiments.

In addition, function units in embodiments of this application may be integrated into one unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, a network device, or the like) to perform all or some of the steps of the methods described in embodiments of this application. The foregoing storage medium may include any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A neural network building method, comprising:
initializing search space and a plurality of building blocks, wherein the search space comprises a plurality of operators, and the building block is a network structure obtained by connecting a plurality of nodes by using the operator;
in at least one training round, randomly discarding some of the plurality of operators, and updating the plurality of building blocks by using operators that are not discarded; and
building a target neural network based on the plurality of updated building blocks.

2. The method according to claim 1, wherein the building a target neural network based on the plurality of updated building blocks comprises:
building the target neural network based on the plurality of updated building blocks obtained in a last training round.

3. The method according to claim 1 or 2, wherein the randomly discarding some of the plurality of operators comprises:
grouping the plurality of operators into a plurality of operator groups based on types of the plurality of operators, wherein
during random discarding, each of the plurality of operator groups reserves at least one operator.

4. The method according to claim 3, wherein the plurality of operator groups have different discard rates, and the discard rate indicates a probability that each type of operator in the plurality of operator groups is discarded.

5. The method according to claim 3 or 4, wherein the plurality of operator groups are determined based on a quantity of parameters comprised in each type of operator in the plurality of operators.

6. The method according to any one of claims 3 to 5, wherein the plurality of operator groups comprise a first operator group and a second operator group, none of operators in the first operator group comprises a parameter, and each operator in the second operator group comprises a parameter.

7. The method according to any one of claims 1 to 6, wherein the updating the plurality of building blocks by using operators that are not discarded comprises:
when the plurality of building blocks are updated, performing weight attenuation only on a parameter comprised in the operator that is not discarded.

8. The method according to any one of claims 1 to 7, wherein the method further comprises:
adjusting architecture parameters of the plurality of updated building blocks based on a relationship between the discarded operator and the operator that is not discarded.

9. The method according to any one of claims 1 to 8, wherein the operator comprises at least one of the following: skip connection, average pooling, maximum pooling, separable convolution, dilated separable convolution, or a zero operation.

10. The method according to any one of claims 1 to 9, wherein the method further comprises:
obtaining an image classification training sample; and
training the target neural network based on the image classification training sample, to obtain an image classification model, wherein the image classification model is used to classify an image.

11. The method according to any one of claims 1 to 9, wherein the method further comprises:
obtaining a target detection training sample; and
training the target neural network based on the target detection training sample, to obtain a target detection model, wherein the target detection model is used to detect a target from a to-be-processed image.

12. The method according to claim 11, wherein the target comprises at least one of the following: a vehicle, a pedestrian, an obstacle, a road sign, and a traffic sign.

13. A neural network building apparatus, comprising:
an initialization unit, configured to initialize search space and a plurality of building blocks, wherein the search space comprises a plurality of operators, and the building block is a network structure obtained by connecting a plurality of nodes by using the operator; and
a training unit, configured to: in at least one training round, randomly discard some of the plurality of operators, and update the plurality of building blocks by using operators that are not discarded, wherein
the training unit is further configured to build a target neural network based on the plurality of updated building blocks.

14. The apparatus according to claim 13, wherein the training unit is specifically configured to build the target neural network based on the plurality of updated building blocks obtained in a last training round.

15. The apparatus according to claim 13 or 14, wherein the training unit is specifically configured to:
group the plurality of operators into a plurality of operator groups based on types of the plurality of operators, wherein
during random discarding, each of the plurality of operator groups reserves at least one operator.

16. The apparatus according to claim 15, wherein the plurality of operator groups have different discard rates, and the discard rate indicates a probability that each type of operator in the plurality of operator groups is discarded.

17. The apparatus according to claim 15 or 16, wherein the plurality of operator groups are determined based on a quantity of parameters comprised in each type of operator in the plurality of operators.

18. The apparatus according to any one of claims 15 to 17, wherein the plurality of operator groups comprise a first operator group and a second operator group, none of operators in the first operator group comprises a parameter, and each operator in the second operator group comprises a parameter.

19. The apparatus according to any one of claims 13 to 18, wherein the training unit is specifically configured to: when the plurality of building blocks are updated, perform weight attenuation only on a parameter comprised in the operator that is not discarded.

20. The apparatus according to any one of claims 13 to 19, wherein the training unit is specifically configured to adjust architecture parameters of the plurality of updated building blocks based on a relationship between the discarded operator and the operator that is not discarded.

21. The apparatus according to any one of claims 13 to 20, wherein the operator comprises at least one of the following: skip connection, average pooling, maximum pooling, separable convolution, dilated separable convolution, and a zero operation.

22. The apparatus according to any one of claims 13 to 21, wherein the apparatus further comprises:
an obtaining unit, configured to obtain an image classification training sample, wherein
the training unit is further configured to train the target neural network based on the image classification training sample, to obtain an image classification model, wherein the image classification model is used to classify an image.

23. The apparatus according to any one of claims 13 to 21, wherein the apparatus further comprises:
an obtaining unit, configured to obtain a target detection training sample, wherein
the training unit is further configured to train the target neural network based on the target detection training sample, to obtain a target detection model, wherein the target detection model is used to detect a target from a to-be-processed image.

24. The apparatus according to claim 23, wherein the target comprises at least one of the following: a vehicle, a pedestrian, an obstacle, a road sign, and a traffic sign.

25. A computer-readable storage medium, wherein the computer-readable medium stores program code used by a device for execution, and the program code comprises instructions used to perform the method according to any one of claims 1 to 12.

26. A chip, wherein the chip comprises a processor and a data interface, and the processor reads, through the data interface, instructions stored in a memory, to perform the method according to any one of claims 1 to 12.
